# EUROPEAN PATENT SPECIFICATION

(11) **EP 3 326 825 B1**
(45) Date of publication and mention of the grant of the patent: **07.12.2022**
(21) Application number: 17203946.3
(22) Date of filing: 28.11.2017
(51) Int. Cl.: B41J 2/21, B41J 2/175, D06P 5/30

(54) **IMAGE PROCESSING DEVICE, PRINTING DEVICE, PRINTING SYSTEM, LIQUID REPLACEMENT DATA GENERATING METHOD, AND LIQUID REPLACEMENT METHOD**
BILDVERARBEITUNGSVORRICHTUNG, DRUCKVORRICHTUNG, DRUCKSYSTEM, VERFAHREN ZUR ERZEUGUNG VON FLÜSSIGKEITSAUSTAUSCHDATEN UND FLÜSSIGKEITSAUSTAUSCHVERFAHREN
DISPOSITIF DE TRAITEMENT D'IMAGES, DISPOSITIF D'IMPRESSION, SYSTÈME D'IMPRESSION, PROCÉDÉ DE GÉNÉRATION DE DONNÉES DE REMPLACEMENT DE LIQUIDE ET PROCÉDÉ DE REMPLACEMENT DE LIQUIDE

(30) Priority: 29.11.2016 JP 2016230936
(43) Date of publication of application: 30.05.2018
(73) Proprietor: Seiko Epson Corporation, Tokyo 160-8801 (JP)
(72) Inventor: KONDO, Takamitsu, Suwa-shi, Nagano 392-8502 (JP)
(74) Representative: Miller Sturt Kenyon

(56) References cited:
- US-A1- 2003 132 994
- US-A1- 2011 090 267
- US-A1- 2011 227 973
- US-A1- 2014 292 870
- US-B1- 6 183 071

## Description

### BACKGROUND

### 1. Technical Field

The present invention relates to an image processing device, a printing device, a printing system, a liquid replacement data generating method, and a liquid replacement method.

### 2. Related Art

In the related art, an inkjet type printing device has been used, which, while reciprocating a head having a plurality of nozzle rows in the main scanning direction, discharges a liquid from the head to a medium such as cotton, silk, wool, chemical fiber, a mixture, or the like to print an image and the like on the medium. In the printing device, there is a printing method in which the ink discharged onto a printing surface is caused to be penetrated up to the opposite surface of the printing surface and the same image as the printed image is formed on the both surfaces of the medium. A method is also known in which a penetrant liquid for accelerating ink penetration is discharged onto the medium before and after ink discharging, that is, nozzle rows for discharging the penetrant liquid are provided at both end portions of the head so as to suitably form an image on the both surfaces of the medium. For example, JP-A-2013-7126 discloses an ink jet printing device having a head in which nozzle rows for the penetrant liquid is arranged at both outer sides of nozzle rows for six color inks.

However, in the printing device (ink jet printing device) of JP-A-2013-7126, the nozzle rows dedicated to discharging the penetrant liquid are provided separately from the nozzle rows for discharging color inks, which results in an increase in size of the printing device. A method exists in which all nozzle rows are usually used for discharging color inks, and as necessary, one of the color inks is replaced with the penetrant liquid. However, it is difficult to place the nozzle rows for discharging the penetrant liquid at both end portions of the head.

US2014292870 discloses a method for calculating a compensation value for use in a correction of a liquid landing position in a liquid ejection device. The device is provided with a first head for ejecting a first colored liquid and a second head for ejecting a transparent liquid. Forming a test pattern on a medium includes feeding the first colored liquid to the second head and causing the second head to eject the first colored liquid, and obtaining a compensation value for a correction of a landing position of a liquid ejected by the second head on the basis of the test pattern formed on the medium.

US2011227973 discloses a modular printing device that may be configured with different numbers of ink colors and ink types and with a different cross-process direction print resolution for each ink color and ink type. The modular printing device configurable to print with multiple combinations of ink colors and ink types at different print resolutions includes a plurality of printhead arrays, each printhead array being configured to eject ink onto an image receiving surface at a first print resolution in a cross-process direction, a plurality of ink supplies, each ink supply being configured to store ink and to provide ink to one printhead array in the plurality of printhead arrays, and a controller configured to operate the plurality of printhead arrays at one of at least two combinations of ink colors and ink types, each combination identifying an ink color or an ink type to be ejected by each printhead array and the controller operating the printhead arrays ejecting a same ink color or a same ink type at a print resolution in the cross-process direction corresponding to the number of printhead arrays ejecting the same ink color or the same ink type.

US2003132994 discloses a portable ink pumping system for supplying ink to an ink fountain. The system includes a cart, a container, a progressive cavity pump, and an ink fountain mounting bar. The ink fountain mounting bar is designed to be releasably connected to the ink fountain of a printing station. The ink fountain mounting bar includes a proximity sensor, a control box, and at least two ink dispensing nozzles. The proximity sensor monitors the level of the ink in the ink fountain while the control box controls the level of the ink. The material of the nozzles and associated fittings and tubing allows for quick and thorough cleaning of any remaining ink when an ink change is required. Moreover, when a radical ink color change is required, the nozzles, fittings, and tubing can be removed and replaced with new components.

US2011090267 discloses a liquid ejecting apparatus that ejects liquid from an ejecting nozzle provided in an ejecting head includes a first container that contains a first liquid and a second container that contains a second liquid. The liquid ejecting apparatus includes a channel that selectively communicates with either the first or second container to supply the liquid contained therein to the ejecting head, a switching unit that performs a switching operation of switching between a first communicating state in which the channel communicates with the first container and a second communicating state in which the channel communicates with the second container. In addition, if the remaining amount of the second liquid contained in the second container is less than a predetermined value, prohibits the switching unit from performing the switching operation of switching from the second communicating state to the first communicating state.

### SUMMARY

The invention can be realized as following aspects or application examples.

According to an aspect of the invention, there is provided an image processing device as defined in claim 1.

When it is necessary to newly place the penetrant liquid in the head, the image processing device determines the replacement ink according to the usage amount of each color ink placed in the nozzle row, generates ink replacement data for replacing the replacement ink and the penetrant liquid, and outputs the ink replacement data to the printing device. This allows the image processing device to easily place the penetrant liquid in the printing device by the liquid replacement data which is a procedure to replace the color ink and the penetrant liquid, and to place the penetrant liquid in the end nozzle row. That is, by using the image processing device according to the application example, it is not necessary to provide a nozzle row dedicated to discharging the penetrant liquid in the printing device, and therefore it is possible to reduce the size of the printing device. Accordingly, it is possible to provide the image processing device capable of reducing the size of the printing device by easily placing the penetrant liquid in the end nozzle rows at both end portions of the head, as necessary.

Preferably, in the image processing device, when the replacement ink is placed in a nozzle row other than the end nozzle row, the color ink filled in the end nozzle row may be placed in a nozzle row filled with the replacement ink.

When it is determined that the replacement ink is placed in a nozzle row other than the end nozzle row in the determining of a replacement ink, the image processing device generates the liquid replacement data for placing the color ink filled in the end nozzle row in the nozzle row filled with the replacement ink. In this way, it is possible to place the penetrant liquid in the end nozzle row.

Preferably, in the image processing, a profile is generated based on a nozzle row placement determined by the nozzle placing method.

In order to place the penetrant liquid in the end nozzle row, the image processing device generates a profile (for example, an International Color Consortium (ICC) profile) based on newly determined nozzle row placement. The nozzle row placement of the printing device is changed to a new nozzle row placement and then the ICC profile is used, thereby making it possible that the image processing device can cause the printing device to perform printing. As a result, it is possible to cause the printing device to print an excellent color.

Preferably, the image processing device may further include a display and an input section, and a replacement candidate ink that is a candidate for the replacement ink based on the usage amount may be displayed on the display, and the replacement candidate ink selected by the input section may be determined to be the replacement ink.

Since in the image processing device the display is provided to display replacement candidate inks for being replaced with the penetrant liquid, it is possible to notify a user of the replacement candidate inks. Further, since in the image processing device the input section is provided to allow a user to select a replacement candidate ink, it is possible to reflect the user's intention when the user decides the replacement ink.

Preferably, in the image processing device, the replacement ink is determined from color inks other than cyan, yellow, magenta and black color inks.

In the image processing device, the color inks including cyan, yellow, and magenta, which are so called three primary colors, represented by the printing device, and further including black that represents black color are not used as the replacement ink (ink to be replaced) even if the usage amount of the color inks mentioned above is small. That is, even in a case of using the penetrant liquid, the image processing device generates the liquid replacement data for placing the color inks including cyan, yellow, magenta, and black in the head all the time, thereby making it possible to cause the printing device to print excellent color.

Preferably, in the image processing device, cyan, yellow, magenta and black color inks may be placed in advance in nozzle rows other than the end nozzle row.

The image processing device always generates the liquid replacement data for placing the color inks including cyan, yellow, and magenta, which are three primary colors of, represented by the printing device, and further including black that represents black color in the nozzle rows other than the end nozzle row all the time. In this way, when the penetrant liquid is used, it is highly likely that the replacement ink to be replaced with the penetrant liquid is placed in the end nozzle row. Therefore, the image processing device can efficiently place the penetrant liquid in the end nozzle row in the printing device.

Preferably, there is a printing device including a head having a plurality of nozzle rows that discharge liquids onto a medium, and has a function of filling the head with the liquids selected according to the number of nozzle rows, the liquid being a color ink and a penetrant liquid, the printing device including a receiving unit that receives liquid replacement data for replacing the liquid placed in the head so as to place the penetrant liquid in an end nozzle row that is the nozzle row positioned at the end portion of the head as necessary, the data being output from the image processing device as described above, a discharging unit that discharges the color ink from a liquid flow path through which the liquid flows based on the liquid replacement data, and a filling unit that fills the head with the penetrant liquid or the penetrant liquid and the color ink.

The printing device includes the receiving unit for receiving liquid replacement data for newly placing the penetrant liquid in the end nozzle row, and the discharging unit for discharging the color ink from the liquid flow path based on the liquid replacement data, and the filling unit for filling the head with the penetrant liquid or the penetrant liquid and the color ink. The printing device can easily place the penetrant liquid in the end nozzle row by discharging and filling the liquid according to the liquid replacement data which is generated as necessary and which is a procedure of replacing the color ink and the penetrant liquid, and placing the penetrant liquid in the end nozzle row. Further, since the printing need not be provided with the nozzle row dedicated to discharging the penetrant liquid, it is possible to reduce the size of the device. Therefore, it is possible to provide a printing device which can be reduced in size by easily placing the penetrant liquid in the end nozzles of the head as necessary.

Preferably, in the printing device, when the replacement ink to be replaced with the penetrant liquid is filled in the end nozzle row that is the nozzle row positioned at the end portion of the head, the color ink of the end nozzle row that may be filled with the replacement ink is discharged by the discharging unit, and the penetrant liquid is filled in the end nozzle row by the filling unit.

When the replacement ink is filled in the end nozzle row, the printing device discharges the color ink (replacement ink) of the end nozzle row by the discharging unit and fills the end nozzle row with the penetrant liquid by the filling unit. In this way, the printing device can efficiently replace the replacement ink and the penetrant liquid when the replacement ink is filled in the end nozzle row.

Preferably, in the printing device, when the replacement ink to be replaced with the penetrant liquid is filled in a nozzle row other than the end nozzle row that is a nozzle row positioned at the end portion of the head, the color ink of the nozzle row filled with the replacement ink and the color ink of the end nozzle row may be discharged by the discharging unit, and the penetrant liquid may be filled in the end nozzle row and the color ink filled in the end nozzle row is filled in the nozzle row filled with the replacement ink by the filling unit.

When the replacement ink is filled in the nozzle row other than the end nozzle row, the printing device discharges the color ink in the nozzle row filled with the replacement ink and the color ink in the end nozzle row by the discharging unit, fills the end nozzle row with the penetrant liquid, and fills the nozzle row, in which the replacement ink was filled, with the color ink, which was filled in the end nozzle row, by the filling unit. In this way, the printing device can efficiently replace the replacement ink and the penetrant liquid with each other according to the liquid replacement data even in a case where the replacement ink is filled in the nozzle row other than the end nozzle row.

Preferably, in the printing device, the discharging unit may perform cleaning the liquid flow path.

The printing device discharges the liquid from the liquid flow path by the discharging unit and then performs the cleaning of the inside of the liquid flow path, thereby making it possible to prevent the newly filled liquid from being mixed with the liquid which has been filled up to now.

Preferably, there is provided a printing system including an image processing device as described above, and a printing device accordingly.

In this way, the penetrant liquid is placed in the end nozzle row of the head as necessary, thereby making it possible to provide the printing system allowing the size of the device to be reduced.

According to another aspect of the invention, there is provided a liquid replacement data generating method as defined in claim 11.

The liquid replacement data generating method includes calculating the usage amount of each color ink placed in the nozzle row, determining the replacement ink (ink to be replaced) based on the usage amount of each color ink, and determining a nozzle row placement method so as to place the penetrant liquid in the end nozzle row. When the penetrant liquid is placed in the end nozzle row of the head as necessary, the nozzle placement of the printing device is changed according to the liquid replacement data that is generated by the liquid replacement data generating method, thereby making it possible to easily place the penetrant liquid in the end nozzle row. That is, since it is not necessary for the printing device to have a nozzle row dedicated to discharging the penetrant liquid, it is possible to reduce the size of the printing device. Therefore, it is possible to provide the liquid replacement data generating method capable of easily placing the penetrant liquid in both end nozzles of the head as necessary and reducing the size of the printing device.

Preferably, the liquid replacement data generating method may further include determining whether the replacement ink is placed in a nozzle row other than the end nozzle row, in which when the replacement ink is placed in the nozzle row other than the end nozzle row, the color ink filled in the end nozzle row is placed in a nozzle row that is filled with the replacement ink.

When it is determined that the replacement ink is placed in the nozzle row other than the end nozzle row in the determining, the liquid replacement data generating method includes generating liquid replacement data for placing the color ink filled in the end nozzle row in the nozzle row filled with the replacement ink. In this way, it is possible to place the penetrant liquid in the end nozzle row.

Preferably, the liquid replacement data generating method may further include generating a profile based on the placement of the nozzle rows determined by the determining of the nozzle placing method.

The liquid replacement data generating method includes generating a profile (for example, ICC profile) based on the newly determined placement of the nozzle rows so as to place the penetrant liquid in the end nozzle row. By the liquid replacement data including the ICC profile, it is possible to cause the printing device to perform printing after changing the placement of the nozzle rows of the printing device. In this way, it is possible to cause the printing device to print excellent color.

Preferably, the liquid replacement data generating method may further include displaying replacement candidate inks that are candidates for the replacement ink (ink to be replaced) on a display, and receiving the replacement ink selected from the replacement candidate inks that are displayed.

The liquid replacement data generating method includes receiving the replacement ink selected from the replacement candidate inks displayed on the display, thereby making it possible to reflect a user's intention when the replacement ink is to be determined.

According to another aspect of the invention, there is provided a liquid replacement method of a printing device as defined in claim 15.

Preferably, in the liquid replacement method, when the replacement ink to be replaced with the penetrant liquid is filled in the end nozzle row that is the nozzle row positioned at the end portion of the head, the color ink of the end nozzle row filled with the replacement ink may be discharged in the discharging, and the penetrant liquid may be filled in the end nozzle row in the filling.

When the replacement ink is filled in the end nozzle row, the liquid replacement method includes discharging the color ink (replacement ink) of the end nozzle row and filling the end nozzle row with the penetrant liquid. In this way, in the liquid replacement method, when the replacement ink is filled in the end nozzle row, it is possible to efficiently replace the replacement ink and the penetrant liquid.

Preferably, the liquid replacement method may further include, when the replacement ink to be replaced with the penetrant liquid is filled in a nozzle row other than the end nozzle row positioned at the end portion of the head, discharging the color ink of the nozzle row filled with the replacement ink and the color ink of the end nozzle row in the discharging, and filling the end nozzle row with the penetrant liquid and filling the nozzle row which was filled with the replacement ink with the color ink which was filled in the end nozzle row.

When the replacement ink is filled in the nozzle row other than the end nozzle row, the liquid replacement method includes discharging color inks of the nozzle row filled with the replacement ink and the end nozzle row, filling the end nozzle row with the penetrant liquid, and filling the nozzle row which was previously filled with the replacement ink with color ink that was previously filled in the end nozzle row. In this way, in the liquid replacement method, even when the replacement ink is filled in the nozzle row other than the end nozzle row, it is possible to efficiently replace the replacement ink and the penetrant liquid according to the liquid replacement data.

Preferably, in the liquid replacement method, the discharging may include cleaning the liquid flow path.

The liquid replacement method includes the cleaning of the inside of the liquid flow path after discharging the liquid from the liquid flow path, thereby making it possible to prevent the newly filled liquid from being mixed with the liquid that was filled up to now.

### BRIEF DESCRIPTION OF THE DRAWINGS

Embodiments of the invention will now be described by way of example only with reference to the accompanying drawings, wherein like numbers reference like elements.
Fig. 1 is a schematic view showing an overall configuration of a printing systemaccording to an embodiment.
Fig. 2 is a cross-sectional view taken along the line II-II in Fig. 1.
Fig. 3 is a plan view showing a schematic configuration of a head unit.
Fig. 4 is a side sectional view of a switching valve that constitutes a switching section.
Fig. 5 is a plan view of the switching valve that constitutes the switching section.
Fig. 6 is an electrical block diagram showing an electrical configuration of a printing system.
Fig. 7 is a view illustrating image processing for printing an image.
Fig. 8A is a view illustrating nozzle rows.
Fig. 8B is a table showing placement of liquids.
Fig. 8C is a graph showing the difference in optical density between front and back sides of a medium.
Fig. 9 is a flowchart showing a liquid replacement data generating method.
Fig. 10A is a view showing an example of a placement of nozzle rows of a head before liquid replacement.
Fig. 10B is a view showing a placement of nozzle rows of the head in the middle of liquid replacement.
Fig. 10C is a view showing a placement of nozzle rows of the head after liquid replacement.
Fig. 11 is a flowchart showing a liquid replacement method.

### DESCRIPTION OF EXEMPLARY EMBODIMENTS

Hereinafter, embodiments of the invention will be described with reference to accompanying drawings. In addition, in each of the following drawings, the scale of each layer and each member is made different from the actual scale so as to make each layer and each member to be recognizable size.

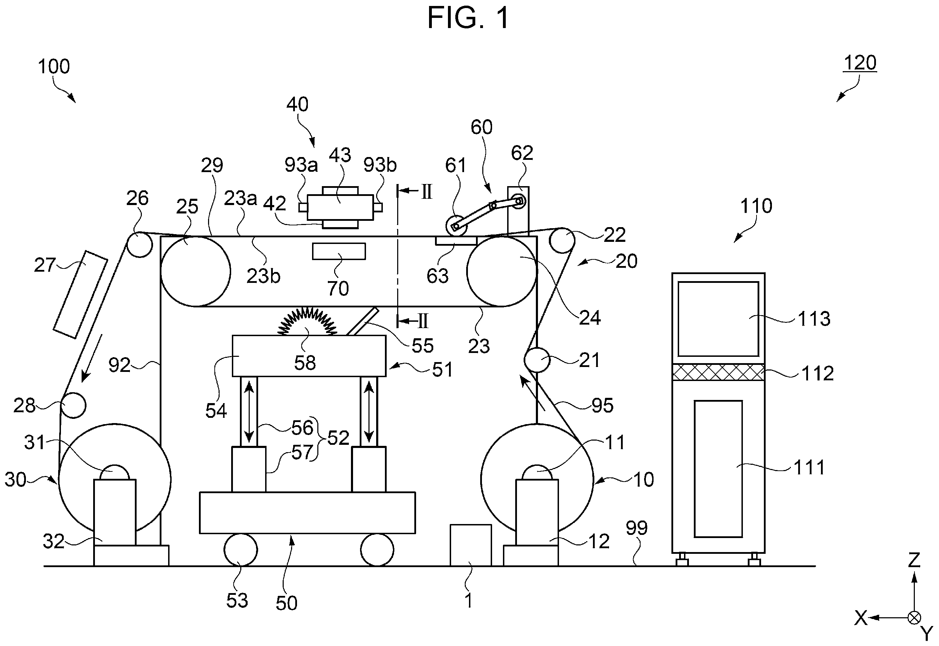

In Figs. 1 to 3, for convenience of description, two or three of the X-axis, the Y-axis and the Z-axis orthogonal to one another are drawn, and a leading end side of an arrow indicating an axial direction is referred to as a "+ side" and a base end side thereof is referred to as a "- side". In the following, a direction parallel to the X-axis is referred to as "X-axis direction", a direction parallel to the Y-axis is referred to as "Y-axis direction", and a direction parallel to the Z-axis is referred to as "Z-axis direction".

### Embodiment

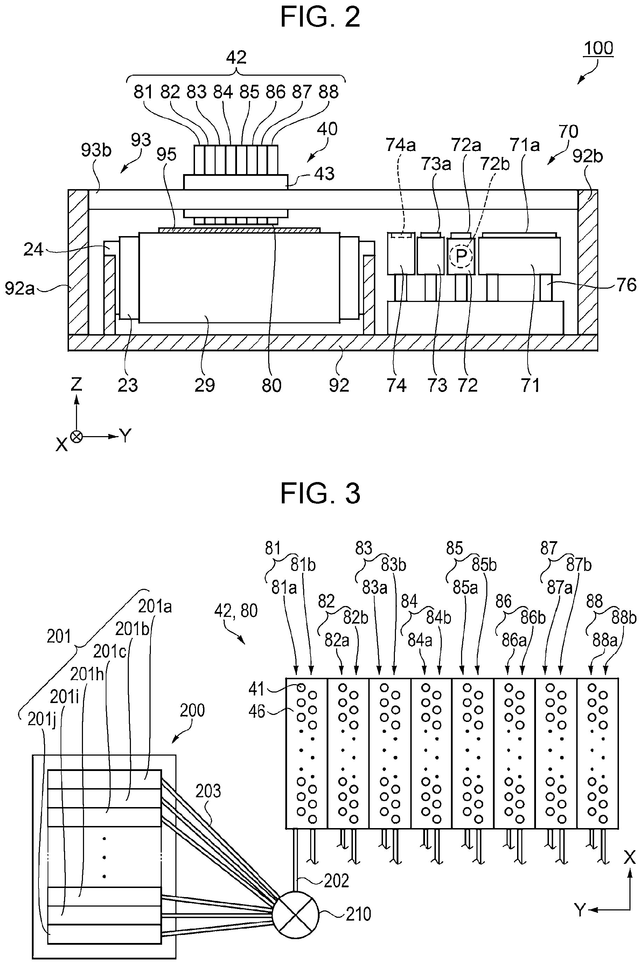

FIG. 1 is a schematic view illustrating a schematic overall configuration of a printing system according to an embodiment. FIG. 2 is a cross-sectional view taken along the line II-II in FIG. 1. First, a schematic view of a printing system 120 according to the present embodiment will be described with reference to FIG. 1. In the present embodiment, the printing system 120 including an ink jet type printing device 100 for performing printing on a medium 95 by forming an image or the like on the medium 95 and an image processing device 110 for generating data that causes the printing device 100 to perform printing will be described as an example.

### Schematic Configuration of Image Processing Device

A configuration of the image processing device 110 will be described.

As shown in FIG. 1, the image processing device 110 includes a printer controller 111, an input section 112, a display 113, and the like. The printer controller 111 controls the input section 112 and the display 113, and controls a print job that causes the printing device 100 to perform printing. The printer controller 111 controls the whole printing system 120 by cooperating with a controller 1 of the printing device 100. The display 113 is, for example, a liquid crystal display. On the display 113, various pieces of information are displayed. The input section 112 includes various kinds of hard keys, a touch panel provided on the surface of the display 113 (liquid crystal display), and the like. The display 113 displays options of various commands with a Graphical User Interface (GUI) button or the like, and various commands are input by a user selecting a command by the input section 112.

### Schematic Configuration of Printing Device

As shown in Fig. 1, the printing device 100 includes a medium transport unit 20, a medium contact unit 60, a printing unit 40, a drying unit 27, a cleaning unit 50, or the like. The printing device 100 also includes a controller 1 for controlling each of the above-mentioned units. Each unit of the printing device 100 is attached to a frame portion 92.

The medium transport unit 20 transports the medium 95 in a transport direction (+ X-axis direction in the printing unit 40). The medium transport unit 20 includes a medium supply section 10, transport rollers 21 and 22, a transport belt 23, a belt rotation roller 24, a belt drive roller 25, transport rollers 26 and 28, and a medium collection unit 30. First, a transport path of the medium 95 from the medium supply section 10 to the medium collection unit 30 will be described. In the present embodiment, the direction of gravity is referred to as the Z-axis, the direction in which the medium 95 is transported in the printing unit 40 is referred to as the X-axis, and the width direction of the medium 95 that intersects both the Z-axis and the X-axis is referred to as the Y-axis.

The medium supply section 10 supplies the medium 95 on which an image is to be formed to the printing unit 40 side. As the medium 95, for example, a woven fabric or a nonwoven fabric made of a natural fiber, cotton, silk, hemp, mohair, wool, cashmere, regenerated fiber, synthetic fiber, nylon, polyurethane, polyester, or a blended spinning thereof can be used. A pretreatment agent may be applied to the woven fabric or the nonwoven fabric so as to promote coloring property and fixing property. The medium supply section 10 has a supply shaft portion 11 and a bearing portion 12. The supply shaft portion 11 is formed in a cylindrical shape and is provided so as to be rotatable in a circumferential direction. On the supply shaft portion 11, a band-shaped medium 95 is wound in a roll shape. The supply shaft portion 11 is detachably attached to the bearing portion 12. In this way, the medium 95 which is wound around the supply shaft portion 11 in advance is attached to the bearing portion 12 together with the supply shaft portion 11. The winding direction and the rotating direction of the medium 95 held on the supply shaft portion 11 are merely examples, and the invention is not limited thereto. The supply shaft portion may be rotated in the reverse direction and the medium 95 may be supplied from a roll in which the medium 95 is wound so that a recording surface thereof faces inward.

The bearing portion 12 rotatably supports both ends of the supply shaft portion 11 in the axial direction. The medium supply section 10 has a rotation drive section (not shown) for rotationally driving the supply shaft portion 11. The rotation drive section rotates the supply shaft portion 11 in a direction in which the medium 95 is transported. The operation of the rotation drive section is controlled by a controller 1. The transport rollers 21 and 22 relay the medium 95 from the medium supply section 10 to the transport belt 23.

The transport belt 23 transports the medium 95 in the transport direction (+ X-axis direction). More specifically, the transport belt 23 is formed in an endless shape by connecting both end portions of a band-shaped belt, and is hung on the belt rotation roller 24 and the belt drive roller 25. The transport belt 23 is held in a state in which a predetermined tension acts so that a portion between the belt rotation roller 24 and the belt drive roller 25 is parallel to a floor surface 99. On the surface (support surface) 23a of the transport belt 23, an adhesive layer 29 for adhering the medium 95 is provided. The transport belt 23 is supplied from the transport roller 22 and supports (holds) the medium 95 that contacts the adhesive layer 29 by the medium contact unit 60 described below. In this way, it is possible to handle stretchable cloth or the like as the medium 95.

The belt rotation roller 24 and the belt drive roller 25 support the inner peripheral surface 23b of the transport belt 23. A support portion for supporting the transport belt 23 may be provided between the belt rotation roller 24 and the belt drive roller 25.

The belt drive roller 25 has a motor (not shown) for rotationally driving the belt drive roller 25. When the belt drive roller 25 is rotationally driven, the transport belt 23 rotates with the rotation of the belt drive roller 25, and the belt rotation roller 24 is rotated by the rotation of the transport belt 23. Through the rotation of the transport belt 23, the medium 95 which is supported on the transport belt 23 is transported in a predetermined transport direction (+ X-axis direction), and an image is formed on the medium 95 by the printing unit 40 described below.

In the present embodiment, the medium 95 is supported on the side of the surface 23a of the transport belt 23 facing the printing unit 40 (+ Z-axis side), and the medium 95 is transported together with the transport belt 23 from the belt rotation roller 24 side to the belt drive roller 25 side (+ X-axis direction). Furthermore, on the side of the surface 23a of the transport belt 23 facing the cleaning unit 50 (- Z-axis side), only the transport belt 23 moves from the belt drive roller 25 side to the belt rotation roller 24 side (- X-axis direction). Although the transport belt 23 has been described as including the adhesive layer 29 which is contacted by the medium 95, it is not limited thereto. For example, the transport belt may be an electrostatic attraction type transport belt that attracts the medium to the belt by static electricity.

The transport roller 26 separates the medium 95 on which an image is formed from the adhesive layer 29 of the transport belt 23. The transport rollers 26 and 28 relay the medium 95 from the transport belt 23 to the medium collection unit 30.

The medium collection unit 30 collects the medium 95 transported by the medium transport unit 20. The medium collection unit 30 has a winding shaft portion 31 and the bearing portion 32. The winding shaft portion 31 is formed in a cylindrical shape or a columnar shape, and provided so as to be rotatable in the circumferential direction. On the winding shaft portion 31, the band-shaped medium 95 is wound in a roll shape. The winding shaft portion 31 is detachably attached to the bearing portion 32. In this way, the medium 95 wound around the winding shaft portion 31 can be removed together with the winding shaft portion 31.

The bearing portion 32 rotatably supports both end portions of the winding shaft portion 31 in the axial direction. The medium collection unit 30 has a rotation drive section (not shown) for rotationally driving the winding shaft portion 31. The rotation drive section rotates the winding shaft portion 31 in a direction in which the medium 95 is wound. The operation of the rotation drive section is controlled by the controller 1. The winding direction and the rotation direction of the medium 95 held in the medium collection unit 30 shown in Fig. 1 are merely examples, and the invention is not limited thereto. The winding shaft portion 31 may be rotated in the reverse direction, and the medium 95 may be wound such that the recording portion thereof faces inward.

Next, each unit that is provided along the medium transport unit 20 will be described.

The medium contact unit 60 brings the medium 95 into close contact with the transport belt 23. The medium contact unit 60 is provided on the upstream side (- X-axis side) of the printing unit 40. The medium contact unit 60 has a pressing roller 61, a pressing roller drive section 62, and a roller support section 63. The pressing roller 61 is formed in a cylindrical shape or a columnar shape and provided so as to be rotatable in the circumferential direction. The pressing roller 61 is disposed so as to rotate along the transport direction by making its axial direction intersect with the transport direction. The roller support section 63 is provided on the inner peripheral surface 23b side of the transport belt 23, which is opposite of the pressing roller 61 with respect to the transport belt 23 interposed therebetween.

The pressing roller drive section 62 moves the pressing roller 61 in the transport direction (+ X-axis direction) and the direction reverse to the transport direction (- X-axis direction) while pressing the pressing roller 61 downward in the vertical direction (- Z-axis direction). The medium 95 overlapped on the transport belt 23 is pressed against the transport belt 23 between the pressing roller 61 and the roller support section 63. In this way, the medium 95 securely adheres to the adhesive layer 29 provided on the surface 23a of the transport belt 23, thereby making it possible to prevent the medium 95 from floating from the transport belt 23.

The drying unit 27 is provided between the transport roller 26 and the transport roller 28. The drying unit 27 allows the ink discharged onto the medium 95 to dry, and the drying unit 27 includes, for example, an IR heater, and can dry the ink discharged onto the medium 95 in a short time by driving the IR heater. In this way, it is possible to wind the band-shaped medium 95 on which an image or the like is formed around the winding shaft portion 31.

The cleaning unit 50 cleans the transport belt 23. The cleaning unit 50 includes a cleaning section 51, a pressing section 52, and a moving section 53. The moving section 53 can integrally move the cleaning unit 50 along the floor surface 99 and fix it at a predetermined position. The cleaning unit 50 is disposed between the belt rotation roller 24 and the belt drive roller 25 in the X-axis direction.

The pressing section 52 is, for example, a lifting device composed of an air cylinder 56 and a ball bush 57, and allows the cleaning section 51 provided above the pressing section 52 to move between a cleaning position and a retreat position. The cleaning position is a position where a cleaning roller 58 and a blade 55 are in contact with the transport belt 23. The retreat position is a position where the cleaning roller 58 and the blade 55 are separated from the transport belt 23. In the cleaning position, the cleaning section 51 cleans the surface (support surface) 23a of the transport belt 23 hung between the belt rotation roller 24 and the belt drive roller 25 in a state in which a predetermined tension acts from the lower side (- Z-axis direction). Fig. 1 shows a case in which the cleaning section 51 is raised to be disposed at the cleaning position.

The cleaning section 51 has a cleaning tank 54, the cleaning roller 58, and the blade 55. The cleaning tank 54 is a tank for storing a cleaning liquid used for cleaning ink and foreign matter adhered to the surface 23a of the transport belt 23, and the cleaning roller 58 and the blade 55 are provided inside the cleaning tank 54. As the cleaning liquid, for example, water or a water soluble solvent (alcoholic aqueous solution or the like) can be used, and a surfactant or a defoaming agent may be added as necessary.

The lower side (- Z-axis side) of the cleaning roller 58 is immersed in the cleaning liquid stored in the cleaning tank 54. When the cleaning roller 58 rotates in the cleaning position, the cleaning liquid is supplied to the surface 23a of the transport belt 23 and the cleaning roller 58 and the transport belt 23 slide. In this way, the ink adhered to the transport belt 23, fibers of the cloth serving as the medium 95, and the like are removed by the cleaning roller 58.

The blade 55 can be formed of, for example, a flexible material such as silicone rubber. The blade 55 is provided on the downstream side of the cleaning roller 58 in the transport direction of the transport belt 23. The cleaning liquid remaining on the surface 23a of the transport belt 23 is removed as the transport belt 23 and the blade 55 slide.

The printing unit 40 discharges an ink that is made of a liquid onto the medium 95 held on the transport belt 23 as droplets.

As shown in Figs. 1 and 2, the printing unit 40 has a head unit 42, a carriage 43 on which the head unit 42 is mounted, and the like. The head unit 42 is constituted by a plurality of sub-units, and in the present embodiment, as an example, a head unit 42 is constituted by eight sub-units 81 to 88. The head unit 42 is reciprocated along the Y-axis direction by a carriage transport section 93 described below.

The carriage transport section 93 reciprocates the head unit 42 along the Y-axis direction together with the carriage 43. The carriage transport section 93 is provided above the transport belt 23 (+ Z axial direction side). The carriage transport section 93 has a pair of guide rails 93a and 93b extending along the Y-axis direction, a carriage position detection device (not shown) provided along the guide rails 93a and 93b, and the like.

The guide rails 93a and 93b are disposed between frame portions 92a and 92b standing on the outside of the transport belt 23 in the Y-axis direction. The guide rails 93a and 93b support the carriage 43. The carriage 43 is guided along the Y direction by the guide rails 93a and 93b, and supported by the guide rails 93a and 93b in a state in which it can reciprocate in the Y-axis direction. The carriage position detection device extends along the guide rails 93a and 93b so that the position of the carriage 43 can be detected in the Y-axis direction.

The carriage transport section 93 includes a moving mechanism and a power source (not shown). As the moving mechanism, for example, a mechanism combining a ball screw with a ball nut or a linear guide mechanism can be employed. Furthermore, a motor (not shown) is provided in the carriage transport section 93 as a power source for moving the carriage 43 along the Y direction. As the motor, various motors such as a stepping motor, a servo motor and a linear motor can be employed. When the motor is driven under the control of the controller 1, the head unit 42 reciprocates along with the carriage 43 in the Y-axis direction.

### Head Unit

Fig. 3 is a plan view showing a schematic configuration of the head unit. Fig. 3 is a view of the head unit 42 in Fig. 2 as seen from a bottom surface (- Z-axis side).

The printing device 100 includes a head 80 having a plurality of nozzle rows 81a to 88a and 81b to 88b for discharging liquids onto a medium. Specifically, the sub-units 81 to 88 have each two nozzle rows, one being row a of nozzle rows 81a to 88a and the other being row b of nozzle rows 81b to 88b (for example, the sub-unit 81 has two nozzle rows of a nozzle row 81a and a nozzle row 81b). That is, the head 80 has 16 rows of nozzle rows 81a to 88a and 81b to 88b.

In each of the nozzle rows 81a to 88a and 81b to 88b, for example, 180 nozzles 41 aligned along the X-axis direction are provided with a nozzle pitch of 180 dots per inch (dpi). The nozzle rows 81b to 88b in the row b are arranged with being shifted in the X-axis direction by a distance corresponding to half of the nozzle pitch with respect to the nozzle rows 81a to 88a in the row a. That is, the same kind of liquid is placed in a nozzle row pair composed of one of nozzle rows 81a to 88a in the row a and one of nozzle rows 81b to 88b in the row b, and therefore it is possible to form dots on the medium 95 at a high resolution of 360 dpi.

The printing device 100 includes an ink supply unit 200 for supplying liquid such as ink to the head 80. In ink supply unit 200, a plurality of ink cartridges 201 in which liquid is stored are mounted in a cartridge holder (not shown). Ten types of ink cartridges 201a to 201j can be mounted to the ink supply unit 200 of the present embodiment. In the ink cartridges 201a to 201j, for example, color inks of Cyan: Cy, Magenta: Ma, Yellow: Ye, Black: Bk, Gray: Gy, Blue: Bu, Red: Rd, Orange: Or, a penetrant liquid for promoting penetration of the color ink discharged onto the medium 95: Ac, and a cleaning liquid for cleaning the inside of a liquid flow path 202 described below: W are stored, respectively. The ink supply unit 200 may be provided in the printing device 100 itself or may be provided separately from the printing device 100. In the following description, each kind of color inks will be denoted as two letters described above, for example, the ink of red color will be denoted as "color ink Rd".

Each of the ink cartridges 201a to 201j communicates with a switching section 210 that switches from one kind of liquid to another to be supplied to the head 80 by selecting an arbitrary ink cartridge among the plurality of ink cartridges 201a to 201j through a cartridge tube 203. The switching section 210 is provided for each of the nozzle rows 81a to 88a and 81b to 88b, and each of the nozzle rows 81a to 88a and 81b to 88b is supplied with an arbitrary liquid of the ink cartridges 201a to 201j.

In the present embodiment, the head 80 is constituted by eight sub-units and eight nozzle row pairs, but the invention is not limited thereto. A head may be formed in which a plurality of nozzle rows is integrally provided.

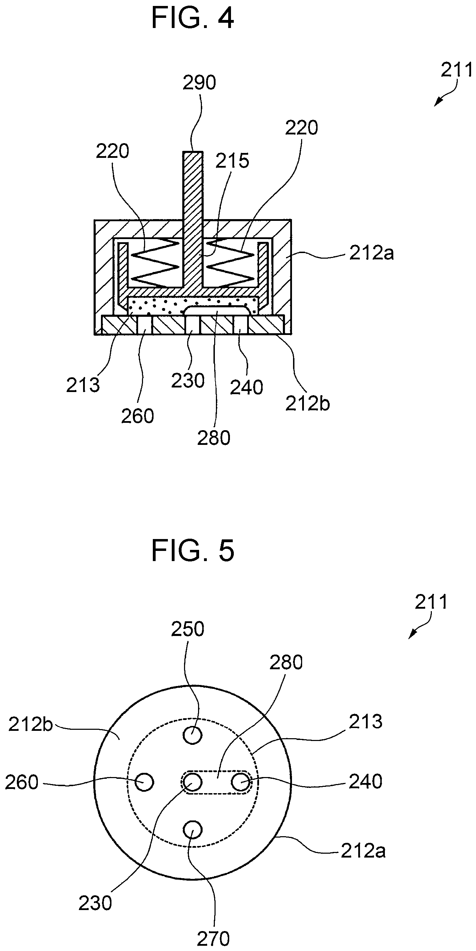

Fig. 4 is a side sectional view of a switching valve that constitutes the switching section. Fig. 5 is a plan view of the switching valve that constitutes the switching section 210. The switching valve 211 will be described with reference to Figs. 4 and 5. For simplification of description, a switching valve 211 selecting any one of four kinds of liquids and supplying the selected liquid to the nozzle row 81a will be described.

The switching valve 211 includes a switching valve housing 212a, an inlet/outlet plate 212b, a valve packing holder 215, a rubber valve packing 213, and a spring 220. The valve packing holder 215 holds the valve packing 213. The spring 220 mounted in the switching valve housing 212a presses the valve packing holder 215. As a result, the valve packing 213 is held between the valve packing holder 215 and the inlet/outlet plate 212b. The inlet/outlet plate 212b is provided with an outlet 230 connected to the nozzle row 81a through a liquid flow path 202 in the central portion of the plate 212b. Around the outlet 230, inlets 240, 250, 260, and 270 are provided which are connected to ink cartridges 201 in which different kinds of liquids are stored through cartridge tubes 203, respectively.

The state shown is a state in which the inlet 240 and the outlet 230 communicate with each other through the flow path 280, and the other three inlets 250, 260, 270 and the outlet 230 are not in communication with each other. From this state, when a tail portion 290 of the valve packing holder 215 is rotated by 90 degrees in a clockwise direction (a counter-clockwise direction as viewed from the side of Fig. 5), the position of the flow path 280 changes, and the inlet that communicates with the outlet 230 connected to the nozzle row 81a moves from the inlet 240 to the inlet 250. Furthermore, when the tail portion 290 is rotated by 90 degrees, the inlet that communicates with the outlet 230 moves from the inlet 250 to the inlet 260. When the tail portion 290 is further rotated by 90 degrees, the inlet that communicates with the outlet 230 moves from the inlet 260 to the inlet 270. Further, when the tail portion 290 is rotated by 90 degrees, the inlet that communicates with the outlet 230 moves from the inlet 270 to the original inlet 240. In this way, the rotation of the tail portion 290 allows the inlet that communicates with the nozzle row 81a through the outlet 230 to be switched from the inlet 240 to the inlet 250, and then the inlet 260, which is, in turn, switched to the inlet 270, and then the inlet 240. In this way, it is possible to switch the kind of liquid to be supplied to the nozzle row 81a.

By using the switching valve having a larger number of inlets or a plurality of switching valves in the switching section 210, an arbitrary liquid among the ink cartridges 201a to 201j is supplied to each of the nozzle rows 81a to 88a and 81b to 88b. Accordingly, it is possible to place liquids selected according to the number of nozzle rows 81a to 88a and 81b to 88b (in the present embodiment, the number of nozzle row pairs which are formed by nozzle rows 81a to 88a in the row a and the nozzle rows 81b to 88b in the row b) in the head 80. The configuration of the switching valve 211 is an example and may be an electromagnetic valve using electromagnetic force. In the above description, the switching section 210 is disposed independently, but the switching section 210 may be disposed in the ink supply unit 200, and may be disposed on the head 80 side.

### Maintenance Unit

Returning to Fig. 2, a maintenance unit 70 will be described. The printing device 100 has a maintenance unit 70 that performs maintenance on the head 80. The maintenance unit 70 is provided on one side (in the present embodiment, + Y-axis direction side) of the transport belt 23 in the Y-axis direction in which the head unit 42 reciprocates. The maintenance unit 70 is provided at a position where the maintenance unit 70 overlaps the head unit 42 that reciprocates in the Y-axis direction in a plan view from the + Z-axis direction. In the present embodiment, the maintenance unit 70 includes a suction section 72 for sucking the head 80, a wiping section 73 for removing liquid, a flushing section 74 for discharging liquid from the nozzle 41 of the head 80 (see Fig. 3), and a cap section 71 for preventing drying of the head 80. In the maintenance unit 70, the cap section 71, the suction section 72, the wiping section 73, and the flushing section 74 are disposed in this order from the end portion in the + Y-axis direction toward - Y-axis direction. The maintenance unit 70 is provided with a lifting device 76 composed of an air cylinder or the like, and, in a maintenance operation, lifted to a contact position in contact with the head 80 or a proximity position close to the head 80.

The cap section 71 is a device for covering the head 80. The ink discharged from the nozzle 41 provided in the head 80 may have volatility, and when the solvent of the ink inside the head 80 evaporates from the nozzle 41, the viscosity of the ink changes and the nozzle 41 may be clogged in some cases. The cap section 71 includes a lid body 71a, and by covering the head 80 with the lid body 71a, clogging of the nozzle 41 is prevented.

The suction section 72 is a device that covers the head 80 for each of the sub-units 81 to 88 and sucks ink in the head 80. In the suction section 72 a lid body 72a and a negative pressure pump 72b are provided, and the negative pressure pump 72b is driven in a state in which the head 80 is covered with the lid body 72a, which makes the inside of the lid body 72a be in a negative state. Since the state inside the lid body 72a is negative, ink in the head 80 is sucked, and through such suction, bubbles and foreign matter in the head 80 can be removed. In this way, it is possible to recover or prevent discharging failure due to bubbles or foreign matter.

The suction section 72 is a discharging means for discharging liquid such as color ink from the liquid flow path 202 (see Fig. 3) through which the liquid flows. The suction section 72 serving as the discharging means allows the liquid remaining in the liquid flow path 202 to be discharged through the head 80 to the outside at the time of replacing liquids, which will be described below, by continuously performing the suction operation. The suction section 72 is a filling means for filling the head 80 with a liquid such as a color ink or a penetrant liquid. The suction section 72 serving as the filling means allows the liquid to be filled in the head 80 by continuously performing the suction operation in a state in which the ink cartridge 201 (see Fig. 3) communicates with the head 80. Therefore, the suction section 72 functions as a discharging/filling means for discharging or filling the liquid. The sucked liquid is discharged to a waste liquid tank (not shown) or the outside of the printing device 100. Although the printing device 100 according to the present embodiment is provided with the suction section 72 that covers each of the sub-units 81 to 88 individually, the suction section 72 may have a configuration in which the head 80 is covered as a whole or may have a configuration in which each of nozzle rows 81a to 88b is covered individually.

The wiping section 73 is a device for wiping a nozzle plate 46 on which the nozzles 41 are formed (see Fig. 3). The nozzle plate 46 is a member disposed on a surface facing the medium 95 in the sub-units 81 to 88. When a liquid or foreign matter is solidified and is attached to the nozzle plate 46, discharging failure may occur in which droplets discharged from the nozzle 41 land on unexpected places of the medium 95. The wiping section 73 includes a blade 73a and a wiping motor (not shown) for moving the blade 73a in the X-axis direction. The wiping section 73 wipes off the liquid or foreign matter adhering to the nozzle plate 46 with the blade 73a, thereby making it possible to recover or prevent discharging failure.

The flushing section 74 is a device for capturing droplets discharged from the nozzle 41. The flushing section 74 includes a flushing box 74a having porous fibers such as felt, and captures droplets discharged from the nozzles 41 so as to clean the inside of the head 80. When the ink in the head 80 is thickened or when the solid matter is mixed in, droplets are discharged from the nozzles 41 such that the thickened ink or the solid matter is removed and the state of the ink is adjusted. In this way, it is possible to recover or prevent discharging failure due to the thickened ink or the solid matter.

### Electrical Configuration

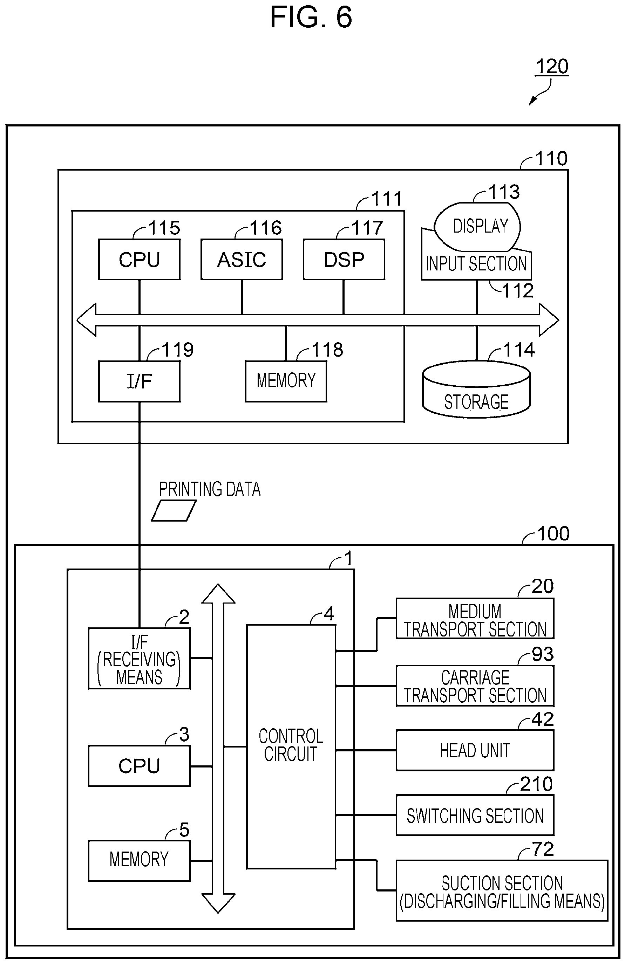

Fig. 6 is an electrical block diagram showing an electrical configuration of the printing system. In the following description, the electrical configuration of the printing system 120 will be described with reference to Fig. 6.

The printing system 120 includes the printing device 100 and an image processing device 110 for generating data for causing the printing device 100 to perform printing. As the image processing device 110, a personal computer or the like can be used. The image processing device 110 may be configured to be provided in the same housing as the printing device 100.

The image processing device 110 includes the printer controller 111, the input section 112, the display 113, a storage 114, and the like, and performs control of an ink job and or like of causing the printing device 100 to perform a printing job.

Software for operating the image processing device 110 includes general image processing application software (hereinafter, referred to as an application) for handling image data to be printed, and printer driver software (hereinafter referred to as a printer driver) that generates printing data for causing the printing device 100 to perform printing.

The printer controller 111 includes a Central Processing Unit (CPU) 115, an Application Specific Integrated Circuit (ASIC) 116, a Digital Signal Processor (DSP) 117, a memory 118, an interface unit (I/F) 119, or the like, and performs central management on the entire printing system 120.

The input section 112 is an information input means serving as a human interface. Specifically, the input section 112 is, for example, a port to which a keyboard or information input device is connected.

The display 113 is an information display means (display) serving as a human interface, and under the control of the printer controller 111, displays information input from the input section 112, images to be printed in the printing device 100, information on replacement candidate inks described below, and the like.

The storage 114 is a rewritable storage medium such as a hard disk drive (HDD) and a memory card, and stores software (a program operated by the printer controller 111) for operating the image processing device 110, images to be printed, information on a printing job, and the like.

The memory 118 is a storage medium for securing an area in which a program operated by the CPU 115 is stored, an operating working area, and the like, and is constituted by a storage element such as Random Access Memory (RAM), Electrically Erasable Programmable Read-Only Memory (EEPROM), and the like.

The printing device 100 includes the controller 1 for controlling each unit included in the printing device 100.

The controller 1 includes a control circuit 4, an interface unit (I/F) 2, a CPU 3, a memory 5, or the like. The interface unit 2 is for receiving and transmitting data between the controller 1 and the image processing device 110 that handles an input signal and an image, and is a receiving means for receiving printing data generated by the image processing device 110, liquid replacement data described below, and the like. The CPU 3 is an arithmetic processing device for performing various input signal processing and control of the entire printing device 100.

The memory 5 is a storage medium for securing an area in which a program of CPU 3 is stored, a working area, and the like, and has a memory element such as a RAM, an EEPROM, and the like.

The controller 1 controls driving of various motors provided in the medium transport unit 20 by a control signal output from the control circuit 4 and moves the medium 95 in the transport direction (+ X-axis direction). The controller 1 controls driving of the motor provided in the carriage transport section 93 by a control signal from the control circuit 4 and moves the carriage 43 on which the head unit 42 is mounted in the width direction of the medium 95 (Y-axis direction). The controller 1 controls driving of the head unit 42 according to control signals output from the control circuit 4 and causes the liquid to be discharged onto the medium 95. Further, the controller 1 controls each device that is not shown.

The controller 1 controls the carriage transport section 93 and the head unit 42. The control allows the carriage 43 (head unit 42) to be moved while discharging ink from the nozzles 41 of the head 80 to thereby perform main scanning, which results in the formation of raster lines arranged in the main scanning direction. The main scanning and sub-scanning in which the controller 1 controls the medium transport unit 20 to transport the medium 95 in the transport direction are repeated, which results in the alignment of the raster lines and the formation of images and the like on the medium 95.

The controller 1 controls the switching valve 211 provided in the switching section 210 according to control signals output from the control circuit 4 so as to communicate an ink cartridge selected from the ink cartridges 201a to 201j with a predetermined nozzle row among nozzle rows 81a to 88a and 81b to 88b.

The controller 1 controls the negative pressure pump 72b provided in the suction section 72 by a control signal output from the control circuit 4 to discharge the liquid remaining in the liquid flow path 202 or to fill the head 80 with a liquid of the ink cartridge 201.

### Image Processing

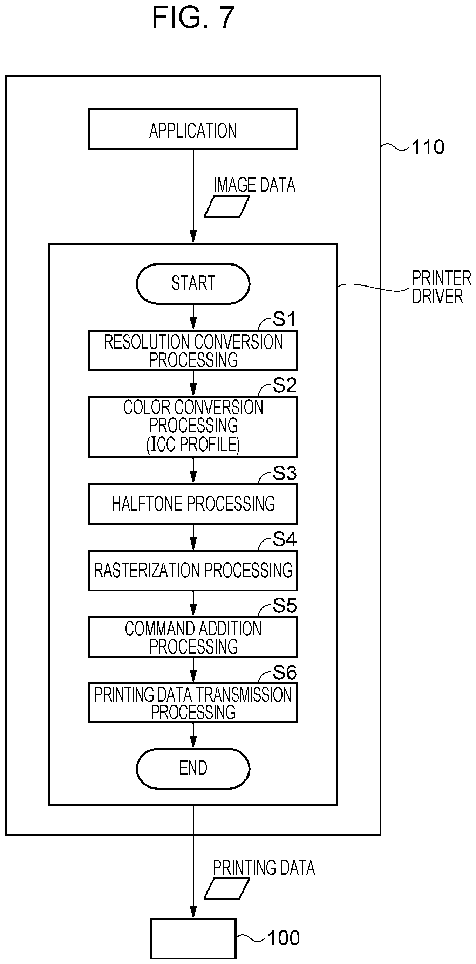

Fig. 7 is a view illustrating image processing for printing an image. In the following, the processing of generating printing data will be described with reference to Fig. 7. Printing on the medium 95 starts with transmission of printing data from the image processing device 110 to the printing device 100. The printing data is generated by the printer driver.

The printer driver receives image data (for example, text data, full color image data) from the application, converts the image data into printing data in a format interpretable by the controller 1, and outputs the printing data to the controller 1. When the image data from the application is converted into the printing data, the printer driver performs resolution conversion processing, color conversion processing (ICC profile generation), halftone processing, rasterization processing, command addition processing, and the like.

The resolution conversion processing in step S1 is a processing of converting the image data output from the application into the resolution when printing (printing resolution) on the medium 95. For example, when the print resolution is specified as 720 x 720 dpi, vector format image data received from the application is converted into bitmap format image data with a resolution of 720 x 720 dpi. Each pixel data of the image data after the resolution conversion processing is composed of pixels arranged in a matrix form. Each pixel has a gradation of 256 gradations in the RGB color space, for example. That is, the pixel data after the resolution conversion indicates the gradation value of the corresponding pixel.

Pixel data corresponding to one row of pixels aligned in a predetermined direction among pixels arranged in the matrix form is referred as raster data. The predetermined direction in which pixels corresponding to the raster data are aligned corresponds to the moving direction (main scanning direction) of the head 80 at the time of printing the image.

The color conversion processing in Step S2 is a processing of converting RGB color space into data of CMYK color space. As the system for performing the conversion, a color management system is used. The color management system converts color spaces using a profile describing correspondence between color spaces (for example, International Color Consortium (ICC) profile). The color space conversion is performed by converting a dependent color space (RGB color space) that depends on a specific device handling image data into an independent color space that does not depend on a device (for example, CIELAB color space), and then converting the converted color space into color space on the output side of the printing device 100 (CMYK color space).

CMYK colors are cyan (C), magenta (M), yellow (Y), and black (K), and the image data of the CMYK color system space is data corresponding to the color of the ink held by the printing device 100. Therefore, for example, when the printing device 100 uses four kinds of inks of the CMYK color system, the printer driver generates image data of the fourdimensional space of the CMYK color system based on RGB data. The color conversion processing is performed based on a table in which gradation values of the RGB data are associated with gradation values of the CMYK color system data (color conversion look-up table (LUT)). The pixel data after the color conversion processing is the CMYK color system data of, for example, 256 gradations represented by the CMYK color system space.

The halftone processing in step S3 is a processing of converting data of a high gradation number (256 gradations) into data of the number of gradations that can be formed by the controller 1. Through the halftone processing, data indicating 256 gradations is converted into 1-bit data indicating 2 gradations (with or without dots) or 2-bit data indicating 4 gradations (no dot, small dot, medium dot, large dot). Specifically, from the generation rate table in which the dot generation data rate corresponds to the gradation value (0 to 255), the dot generation rate corresponding to the gradation value (for example, in a case of 4 gradations, generation rates of no dot, small dot, medium dot, large dot) is obtained, and at the obtained generation rate, pixel data is created so that dots are formed in a dispersed manner by using a dither method, an error diffusion method, or the like.

That is, the pixel data after the halftone processing is 1-bit or 2-bit data, and the pixel data is data indicating formation of dots (presence/absence of dots, size of dots) in each pixel. For example, in a case of 2 bits (4 gradations), the data is converted into 4 levels such as the dot gradation value [00] corresponding to no dot, the dot gradation value [01] corresponding to formation of small dot, the dot gradation [10] corresponding to formation of medium dot, and the gradation value [11] corresponding to formation of large dot.

Rasterization processing in Step S4 is processing of rearranging data of pixels arranged in the matrix form (for example, 2-bit data) according to a dot formation order at the time of printing. The rasterization processing includes a path processing of allocating image data constituted by pixel data after halftone processing to each main scanning in which droplets are discharged while the head unit 42 is reciprocating. When the path allocation is completed, actual nozzles forming each raster line constituting the print image are allocated.

Command addition processing in step S5 is processing of adding command data corresponding to a printing method to the data subjected to the rasterization processing. The command data includes, for example, transport data regarding a medium transport specification (amount of movement and speed in the transport direction, or the like), and the like.

Printing data transmission processing in step S6 is processing of transmitting generated printing data to the printing device 100 through the interface unit 119.

Processing from step S1 to step S6 by the printer driver is performed by ASIC 116 and the DSP 117 under the control of the CPU 115 (see Fig. 6).

Next, the relationship between placement of the penetrant liquid and optical density of an image formed on the front and back sides of the medium will be described.

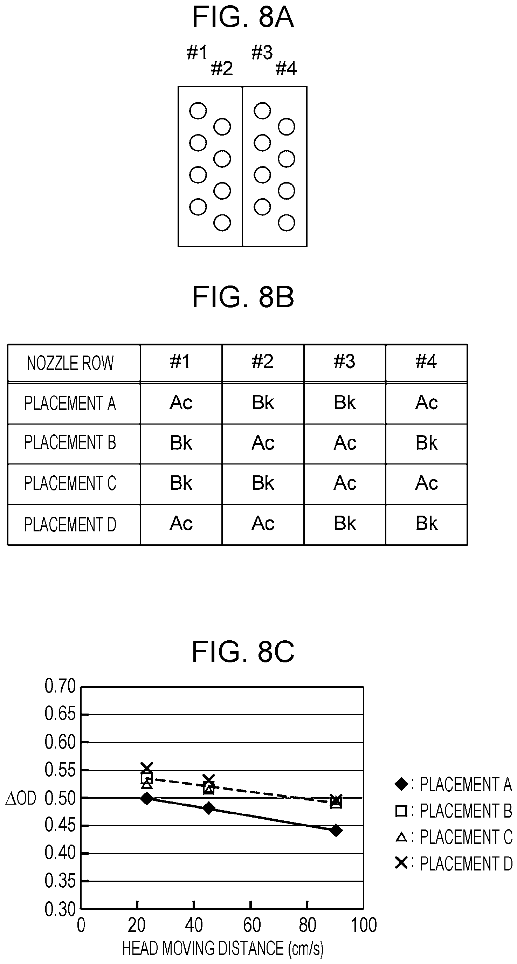

Fig. 8A is a view illustrating nozzle rows. Fig. 8B is a table showing placement of liquids. Fig. 8C is a graph showing the difference in optical density between front and back sides of the medium. The relationship between placement of the penetrant liquid and optical density will be described with reference to Figs. 8A to 8C.

Fig. 8A shows a configuration of the head (nozzle rows) for obtaining the relationship between placement of the penetrant liquid and optical density of the image formed on the front and back sides of the medium. As shown in Fig. 8A, the head has four nozzle rows, and the nozzle row numbers #1 to #4 are written in each nozzle row so as to identify the nozzle row. In Fig. 8A, for ease of illustration, a nozzle row composed of four nozzles is shown.

Fig. 8B shows the type of the liquid (penetrant liquid: Ac, black: Bk) placed in each of nozzle rows #1 to #4. For example, in placement A, the penetrant liquid is placed in the nozzle rows #1 and #4, and the black ink is placed in the nozzle rows #2 and #3. In placement B, the black ink is placed in the nozzle rows #1 and #4, and the penetrant liquid is placed in the nozzle rows #2 and #3. In placement C, the black ink is placed in the nozzle rows #1 and #2, and the penetrant liquid is placed in the nozzle rows #3 and #4. In placement D, the penetrant liquid is placed in nozzle rows #1 and #2, and the black ink is placed in the nozzle rows #3 and #4. That is, in only the placement A, the penetrant liquid is placed in the nozzle rows #1 and #4 that are the nozzle rows positioned at the both end portions of the head (both end nozzle rows). In the other placements B to D, the penetrant liquid is placed in either one of the end nozzle rows #1 and #4, and is not placed in both the end nozzle rows #1 and #4.

The vertical axis of the graph shown in Fig. 8C represents difference in optical density ΔOD between images (colors) formed on the front and back sides of the medium. It indicates that the difference value in the density of images formed on the front and back sides of the medium becomes smaller as the optical density difference ΔOD is smaller. The horizontal axis of the graph shown in Fig. 8C represents the head moving speed at which the head moves in the main scanning direction in printing. The solid line in the graph indicates the difference in optical density ΔOD when printing with the head of placement A, and the broken line indicates the value of the difference in optical density ΔOD when printing in the placements B to D.

As shown in Fig. 8C, it can be seen that the difference in optical density ΔOD between the images formed in the placement A is clearly small compared to the difference in optical density between the images formed in the placements B to D. Since placement of the penetrant liquid in the end nozzle rows #1 and #4 makes the difference in optical density of images formed on the both sides of the medium reduced, it is possible to improve the quality of the printing image. In addition, it is also known that the difference in optical density ΔOD is improved as the discharging amount of the penetrant liquid is increased. Placing the penetrant liquid in the end nozzle rows can mean that the consumption of the penetrant liquid is suppressed.

### Liquid Replacement Data

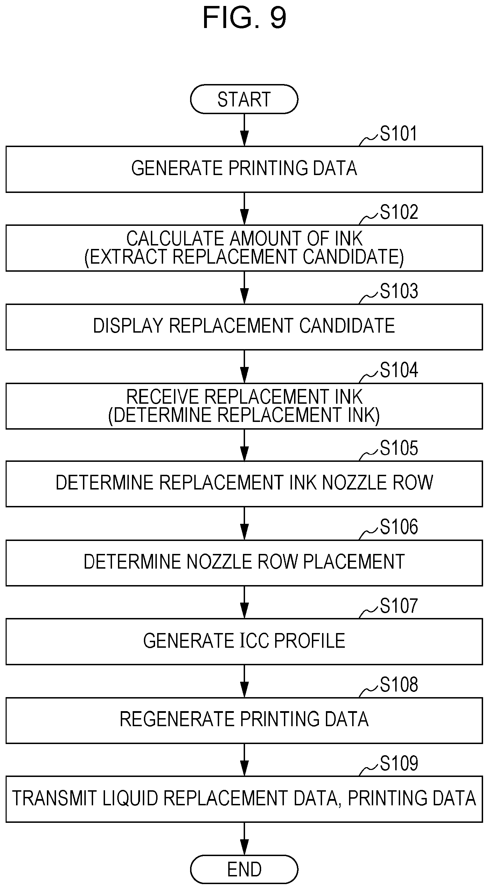

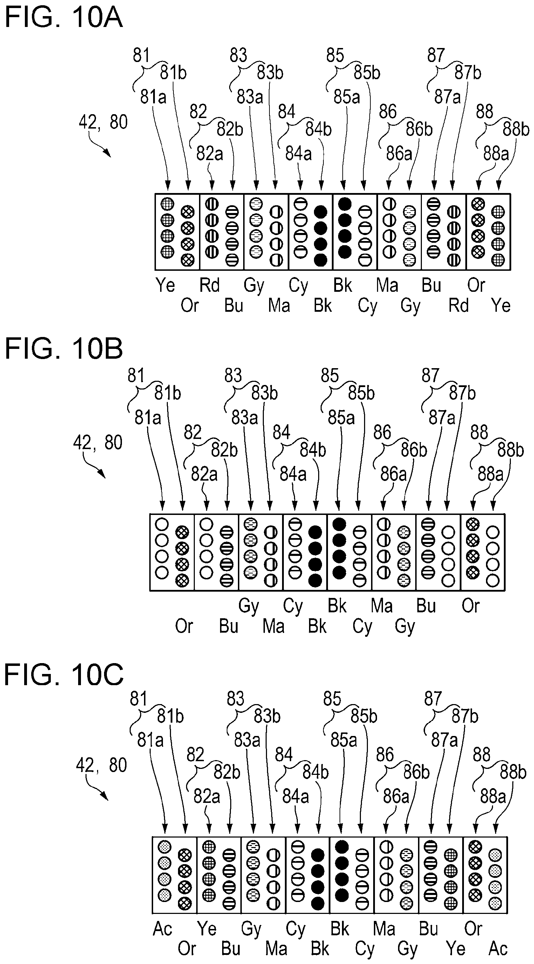

Fig. 9 is a flowchart showing a liquid replacement data generating method. Fig. 10A is a view showing an example of a placement of nozzle rows of the head before liquid replacement. Fig. 10B is a view showing the placement of nozzle rows of the head in the middle of liquid replacement. Fig. 10C is a view showing the placement of nozzle rows of the head after liquid replacement. Figs. 10A to 10C show the placement of liquids that are placed (filled) in each of nozzle rows 81a to 88b of the head 80 (hereinafter, referred to as nozzle row placement). In Figs. 10A to 10C, for ease of illustration, nozzle rows composed of 4 nozzles each are shown.

Next, with reference to Fig. 9 and Figs. 10A to 10C, a liquid replacement data generating method which is generated by the image processing device 110 and which causes the liquid to be placed in the head 80 when it is necessary to newly place the penetrant liquid in the head 80 will be described.

Step S101 is a printing data generation step for generating printing data. The printer controller 111 (printer driver) receives image data from the application and performs image processing.

As shown in Fig. 10A, color inks of Ye, Or, Rd, Bu, Gy, Ma, Cy, Bk, Bk, Cy, Ma, Gy, Bu, Rd, Or, and Ye are placed in order from the nozzle row 81a to the nozzle row 88b in the head 80 of the printing device 100. The printer controller 111 performs image processing from the resolution conversion processing in step S1 to the command addition processing in step S5 described above based on the head 80 in which the eight types of color inks are placed.

Step S102 is an ink amount calculation step of calculating the usage amount of each color ink from the printing data generated based on the color inks placed in the nozzle rows 81a to 88b. The printer controller 111 integrates the discharging amounts of the color ink discharged from each of the nozzle rows 81a to 88b and calculates the usage amount for each color ink from the printing data generated in step S101. When there is a plurality of images to be printed, the usage amount for each color ink may be obtained by calculating the usage amount for each image and evaluating an average value of the calculated results.

Then, the printer controller 111 extracts replacement candidate inks that are candidates for inks to be replaced (sometimes called replacement inks in this specification) with the penetrant liquid Ac based in the usage amount. Here, the printer controller 111 sets as the replacement candidate inks that are less consumed except for color inks of cyan, yellow, and magenta, which are three primary colors and the color ink of black. That is, even when the penetrant liquid Ac is used, since color inks including cyan, yellow, magenta, and black are always placed in the head, it is possible for the printer controller 111 to cause the printing device 100 to print excellent color. One kind of replacement candidate ink may be extracted or two or more types of replacement candidate ink may be extracted.

Step S103 is a replacement candidate display step of displaying the replacement candidate ink on the display 113. The printer controller 111 displays the replacement candidate ink extracted in step S102 on the display 113. In this way, it is possible to notify the replacement candidate ink to a user.

Step S104 is a replacement ink reception step of receiving the ink to be replaced and a replacement ink determination step of determining the ink to be replaced. The printer controller 111 receives a signal input to the input section 112 as the ink to be replaced, from among replacement candidate inks displayed on the display 113. The printer controller 111 determines the ink to be replaced with the penetrant liquid Ac based on the received signal. In this way, it is possible to reflect the intention of the user at the time of determining the ink to be replaced.

The ink to be replaced is determined from color inks other than cyan, yellow, magenta, and black by steps S102 to S104. That is, even when the penetrant liquid Ac is used, the printer controller 111 always generates the liquid replacement data for placing color inks including Cy, Ye, Ma, and Bk in the head, whereby it is possible to print excellent color in the printing device 100. In the description below, it is assumed that the color ink Rd is determined as the ink to be replaced.

Step S105 is a determination step of determining whether or not the ink to be replaced is placed in a nozzle row other than the end nozzle rows 81a and 88b. The printer controller 111 determines the nozzle row in which the color ink Rd is placed as the ink to be replaced from the placement of color inks in the nozzle rows 81a to 88b (the placement in Fig. 10A) stored in the storage 114.

Step S106 is a nozzle row placement determination step of determining a nozzle row placement method for placing the penetrant liquid Ac in the end nozzle rows 81a and 88b that are nozzle rows positioned at the end portion of the head 80. When the ink to be replaced (color ink Rd) is placed in the end nozzle rows 81a and 88b (not shown), the printer controller 111 discharges the color ink Rd filled in the end nozzle rows 81a and 88b, and generates liquid replacement data indicating a nozzle row placement method for filling the nozzle rows 81a and 88b with the penetrant liquid.

Further, as shown in Fig. 10A, when the ink to be replaced (color ink Rd) is placed in a nozzle row other than the end nozzle rows 81a and 88b, the printer controller 111 fills the nozzle rows 82a and 87b filled with the color ink Rd, with the color ink Ye filled in the end nozzle rows 81a and 88b, and fills the end nozzle rows 81a and 88b filled with the color ink Ye with the penetrant liquid Ac. That is, the printer controller 111 discharges the color ink Rd in the nozzle rows 82a and 87b and the color ink Ye in the end nozzle rows 81a and 88b from the nozzle row placement shown in Fig. 10A (the nozzle row placement shown in Fig. 10B), and then fills the nozzle rows 82a and 87b with the color ink Ye to generate the liquid replacement data for filling the end nozzle rows 81a and 88b with the penetrant liquid Ac (the nozzle row placement shown in Fig. 10C).

It is preferable that the printer controller 111 place the color inks of cyan, yellow, magenta and the black in nozzle rows other than the end nozzle rows 81a and 88b in advance. In this way, when the penetrant liquid is to be newly used, there is high possibility that the ink to be replaced with the penetrant liquid is placed in the end nozzle rows 81a and 88b. Therefore, in the printing device 100, the image processing device 110 can cause the penetrant liquid to be efficiently placed in the end nozzle rows 81a and 88b.

The configuration of the head 80 in which the color inks are positioned symmetrically in the present embodiment is merely one example. In the head 80, the color inks each may be paired with the nozzle rows 81a to 88a in the row a and the nozzle rows 81b to 88b in the row b.

Step S107 is a profile generation step of generating an ICC profile based on the nozzle row placement determined in step S106. The printer controller 111 generates the ICC profile according to the color conversion LUT using seven kinds of color inks shown in Fig. 10C, and performs color conversion processing described in step S2. In this way, it is possible to cause the printing device 100 to print excellent color. When the placement of color inks changes, the landing order of color inks also changes, and as a consequence hue of the image formed changes. Therefore, by re-creating the profile according to the changed array and performing color conversion it is possible to minimize the change of hue.

Step S108 is a printing data regenerating step of regenerating print data. The printer controller 111 generates the printing data performing steps S3 to S6 described above.

Step S109 is a liquid replacement data and printing data transmission step of transmitting the generated liquid replacement data and printing data to the printing device 100. The printer controller 111 outputs the printing data and the liquid replacement data generated in steps S101 to S108 to the printing device 100 through the interface unit 119. In this way, the image processing device 110 can easily place the penetrant liquid in the printing device 100 according to the liquid replacement data which is the procedure of replacing the color ink and the penetrant liquid and placing the penetrant liquid in the end nozzle rows 81a and 88b. Furthermore, it is possible to allow the printing device 100 to perform printing suitably by the generated printing data.

### Liquid Replacement Method

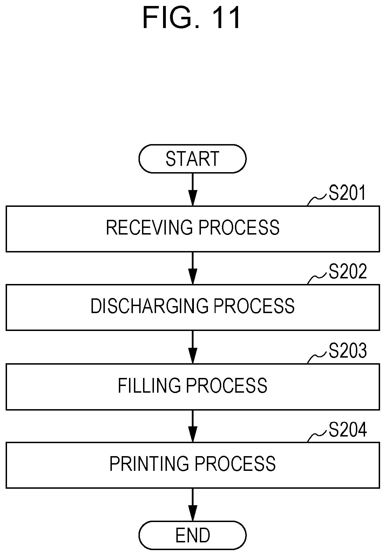

Fig. 11 is a flowchart showing a liquid replacement method.

Next, with reference to Figs. 10A to 10C and Fig. 11, there will be described a liquid replacement method of replacing liquids placed in the head 80 based on the liquid replacement data generated by the image processing device 110.

Step S201 is a receiving process of receiving liquid replacement data and printing data for replacing liquids placed in the head 80. The controller 1 of the printing device 100 receives the liquid replacement data and the printing data output from the image processing device 110, and stores the liquid replacement data and the printing data in the memory 5 through the interface unit 2 as the receiving means.

Step S202 is a discharging process of discharging the color ink from the liquid flow path 202 based on the liquid replacement data. In the discharging process, the liquid flow path 202 is also cleaned.

For example, when the liquid replacement data generated when the ink to be replaced is filled in the end nozzle rows 81a and 88b (not shown) is stored in the memory 5, the controller 1 refers to the liquid replacement data stored in the memory 5 and discharges the color inks of end nozzle rows 81a and 88b filled with the replacement ink, (that is, the ink to be replaced). Specifically, the controller 1 controls the switching section 210 to switch the ink cartridge 201 connected to the end nozzle rows 81a and 88b from the ink cartridge 201 in which the ink to be replaced is stored to the ink cartridge 201 in which the cleaning liquid W is stored.

The controller 1 controls the carriage transport section 93 to move the end nozzle rows 81a and 88b to the position overlapping the suction section 72 serving as the discharging means, controls the suction section 72 to cover the end nozzle rows 81a and 88b with the lid body 72a, and drives the negative pressure pump 72b. In this way, color inks are discharged from the end nozzle rows 81a and 88b, and the color inks are replaced with the cleaning liquid W. At this time, from the liquid flow path 202 communicating with the end nozzle rows 81a and 88b to the end nozzle rows 81a and 88b are cleaned with the cleaning liquid W.

In addition, as shown in Fig. 10A, when the liquid replacement data that is generated when the ink to be replaced (color ink Rd) is placed in a nozzle row other than the end nozzle rows 81a and 88b is stored in the memory 5, the controller 1 refers to the liquid replacement data stored in the memory 5, and in this embodiment discharges the color inks in the nozzle rows 82a and 87b in which the color ink Rd is filled and the color ink (color ink Ye) in the end nozzle rows 81a and 88b. Specifically, the controller 1 controls the switching section 210, and switches the ink cartridge 201 communicating with the nozzle rows 82a and 87b from the ink cartridge 201 in which the ink to be replaced (color ink Rd) is stored to the ink cartridge 201 in which the cleaning liquid W is stored. At the same time, the controller 1 switches the ink cartridge 201 communicating with the end nozzle rows 81a and 88b from the ink cartridge 201 in which the color ink Ye is stored to the ink cartridge 201 in which the cleaning liquid W is stored.

The controller 1 controls the carriage transport section 93 to move the nozzle rows 82a and 87b and the end nozzle rows 81a and 88b to the position overlapping the suction section 72, and controls the suction section 72 to cover the nozzle rows 82a and 87b and the end nozzle rows 81a and 88b with the lid body 72a and drive the negative pressure pump 72b. In this way, the color ink (color ink Rd or color ink Ye) is discharged from the nozzle rows 82a and 87b and the end nozzle rows 81a and 88b, and is replaced with the cleaning liquid W (see Fig. 10B). At this time, the portion from the liquid flow path 202 communicating with the nozzle rows 82a and 87b to the nozzle rows 82a and 87b, and the portion from the liquid flow path 202 communicating with the end nozzle rows 82a and 88b to the end nozzle rows 81a and 88b are cleaned with the cleaning liquid W. In this way, it is possible to prevent the liquid to be newly filled from being mixed with the liquid that has been filled up to now. The discharging process may be performed collectively in the head 80 or may be performed separately for each of the sub-units 81 to 88 or the nozzle rows 81a to 88b.

Step S203 is a filling process of filling the head 80 with the penetrant liquid Ac or the penetrant liquid Ac and the color ink.

For example, when the liquid replacement data generated when the ink to be replaced is filled in the end nozzle row 81a and 88b is stored in the memory 5 (not shown), the controller 1 refers to the liquid replacement data stored in the memory 5, and fills the end nozzle rows 81a and 88b with the penetrant liquid Ac. Specifically, the controller 1 controls the switching section 210 to switch the ink cartridge 201 communicating with the end nozzle rows 81a and 88b from the ink cartridge 201 in which the cleaning liquid W is stored to the ink cartridge 201 in which the penetrant liquid Ac is stored.

The controller 1 controls the carriage transport section 93 to move the end nozzle rows 81a and 88b to the position overlapping the suction section 72 serving as the filling means, and controls the suction section 72 to cover the end nozzle rows 81a and 88b with the lid body 72a and drive the negative pressure pump 72b. In this way, the cleaning water W is discharged from the end nozzle rows 81a and 88b, and the penetrant liquid Ac is filled in the end nozzle rows 81a and 88b.

As shown in Fig. 10A, when the liquid replacement data generated when the ink to be replaced (color ink Rd) is placed in a nozzle row other than end nozzle rows 81a and 88b is stored in the memory 5, the controller 1 refers to the liquid replacement data stored in the memory 5, allows the penetrant liquid Ac to be filled in the end nozzle rows 81a and 88b, and in this embodiment allows the color ink Ye that was in the end nozzle rows 81a and 88b to be filled in the end nozzle rows 82a and 87b in which the color ink Rd was previously filled. Specifically, the controller 1 controls the switching section 210 to switch the ink cartridge 201 communicating with the nozzle rows 82a and 87b from the ink cartridge 201 in which the cleaning liquid W is stored to the ink cartridge 201 in which the color ink Ye is stored. At the same time, the controller 1 switches the ink cartridge 201 communicating with the end nozzle rows 81a and 88b from the ink cartridge 201 in which the cleaning liquid W is stored to the ink cartridge 201 in which the penetrant liquid Ac is stored.

The controller 1 controls the carriage transport section 93 to move the nozzle rows 82a and 87b and the end nozzle rows 81a and 88b to the position overlapping the suction section 72, and controls the suction section 72 to cover the nozzle rows 82a and 87b and the end nozzle rows 81a and 88b with the lid body 72a and drive the negative pressure pump 72b. In this way, the cleaning liquid W is discharged from the nozzle rows 82a and 87b, and the color ink Ye is filled in the nozzle rows 82a and 87b. In addition, the cleaning liquid W is discharged from the end nozzle rows 81a and 88b, and the penetrant liquid Ac is filled in the end nozzle rows 81a and 88b (see Fig. 10C).

The discharging process and the filling process may be collectively performed in the head 80 or may be performed for each of the sub-units 81 to 88 or for each of the nozzle rows 81a to 88b.

Step S204 is a printing process of performing printing on the medium 95. Based on the printing data stored in the memory 5, the controller 1 cooperatively controls the medium transport unit 20, the carriage transport section 93 and the head unit 42, and prints an image or the like on the medium 95 using the head 80 in which the nozzle row placement has been changed. Of course, if it is no longer necessary to use the penetrant liquid Ac, it can be swapped for another color ink, in this case red ink (Rd).

As described above, in the image processing device 110, the printing device 100, the printing system 120, the liquid replacement data generating method, and the liquid replacement method according to the present embodiment, the following effects can be obtained.

When it is necessary to newly place the penetrant liquid Ac in the head 80, the image processing device 110 (the printer controller 111) determines the ink to be replaced based on the usage amount of each color ink placed in the nozzle rows 81a to 88b, and generates the liquid replacement data for replacing the ink to be replaced and the penetrant liquid Ac and placing the penetrant liquid Ac in the end nozzle rows 81a and 88b of the head 80. In addition, the printer controller 111 generates the printing data based on the new nozzle row placement, and outputs the liquid replacement data and the printing data to the printing device 100. In this way, the image processing device 110 can easily place the penetrant liquid Ac in the printing device 100 according to the liquid replacement data which is the procedure of placing the penetrant liquid Ac in the end nozzle rows 81a and 88b. Furthermore, according to the printing data, it is possible to cause the printing device 100 to perform printing after changing to the new nozzle row placement. That is, the use of the image processing device 110 according to the present embodiment makes it unnecessary that the image processing device 110 includes the nozzle row dedicated to discharging the penetrant liquid Ac, whereby it is possible to reduce the size of the printing device 100. Therefore, it is possible to provide the image processing device 110 capable of reducing the size of the printing device 100 by easily placing the penetrant liquid Ac in the end nozzle rows 81a and 88b of the head as necessary.

The printing device 100 includes the interface unit 2 as the receiving means for receiving the liquid replacement data for newly placing the penetrant liquid Ac in the end nozzle rows 81a and 88b of the head 80, the suction section 72 as the discharging means for discharging the color inks from the liquid flow path 202 based on the liquid replacement data, and the suction section 72 as the filling means for filling the penetrant liquid Ac or the penetrant liquid Ac and the color ink in the head 80. The printing device 100 discharges and fills liquids according to the liquid replacement data which is generated as necessary and which is the procedure of replacing the color ink and the penetrant liquid Ac and placing the penetrant liquid Ac in the end nozzle rows 81a and 88b, thereby making it possible to easily place the penetrant liquid Ac in the end nozzle rows 81a and 88b. Furthermore, it is not necessary for the printing device 100 to have a nozzle row dedicated to discharging the penetrant liquid Ac, thereby making it possible to reduce the size of the device. Therefore, it is possible to provide the printing device 100 which can be reduced in size by easily placing the penetrant liquid Ac in both end nozzle rows 81a and 88b of the head 80 as necessary.

The printing system 120 includes the image processing device 110 capable of reducing the size of the printing device 100 by generating the liquid replacement data for placing the penetrant liquid Ac in the end nozzle rows 81a and 88b of the head 80 as necessary, and the printing device 100 capable of replacing the nozzle row placement of the head 80 according to the liquid replacement data. In this way, it is possible to provide the printing system 120 allowing the size of the device to be reduced by placing the penetrant liquid Ac in the end nozzle rows 81a and 88b of the head 80 as necessary.

The liquid replacement data generating method includes the ink amount calculation step of calculating the usage amount of each color ink placed in the nozzle rows 81a to 88b, the replacement ink determination step of determining the ink to be replaced based on the usage amount of each color ink, and the nozzle row placement determination step of determining the nozzle row placement method for placing the penetrant liquid Ac in the end nozzle rows 81a and 88b. When the penetrant liquid Ac is placed in the end nozzle rows 81a and 88b of the head 80 as necessary, the nozzle row placement of the printing device 100 can be changed according to the liquid replacement data generated by the liquid replacement data generating method, thereby making it possible to easily place the penetrant liquid Ac in the end nozzle rows 81a and 88b. That is, since it is not necessary for the printing device 100 to have a nozzle row dedicated to discharging the penetrant liquid Ac, it is possible to reduce the size of the printing device 100. Therefore, it is possible to provide the liquid replacement data generating method, which is capable of causing the penetrant liquid to be easily placed in the both end nozzle rows of the head as necessary, and the size of the printing device 100 to be reduced by the placement.

The liquid replacement method includes the receiving process of receiving the liquid replacement data for newly placing the penetrant liquid Ac in the end nozzle rows 81a and 88b, the discharging process of discharging the color ink from the liquid flow path 202 based on the liquid replacement data, and the filling process of filling the head 80 with the penetrant liquid Ac or the penetrant liquid Ac and the color ink. In the liquid replacement method, each process is performed according to the liquid replacement data which is generated as necessary and which is the procedure of replacing the color ink and the penetrant liquid Ac and placing the penetrant liquid Ac in the end nozzle rows 81a and 88b. Therefore it is possible to easily place the penetrant liquid Ac in the end nozzle rows 81a and 88b. Further, by using the liquid replacement method of the present embodiment, it is not necessary for the printing device 100 to have the nozzle row dedicated to discharging the penetrant liquid Ac, whereby it is possible to reduce the size of the device. Therefore, it is possible to provide the liquid replacement method capable of easily placing the penetrant liquid Ac in both end nozzle rows 81a and 88b of the head 80 as necessary, and as a consequence, reducing the size of the printing device 100.

The foregoing description has been given by way of example only and it will be appreciated by a person skilled in the art that the invention is defined by the claims.

## Claims

1. An image processing device (110) for use with a printing device (100) including a head having a plurality of nozzle rows (81-88) for discharging liquids onto a medium (95), and being configured to fill the head with the liquids selected according to the nozzle rows (81-88), the image processing device being configured to generate data that causes the printing device to perform printing,
wherein the liquids are a color ink and a penetrant liquid (Ac),
when it is necessary to newly dispose the penetrant liquid in the head, the image processing device is configured to
calculate a usage amount of each color ink from printing data generated based on the color ink disposed in the nozzle row (81a-88b), wherein the image processing device is configured to integrate the discharging amounts of the color ink discharged from each of the nozzle rows (81a-88b) and calculates the usage amount for each color ink, and
determine an ink to be replaced with the penetrant liquid based on the usage amount, **characterised in that** the image processing device is further configured to
determine a nozzle row placement method so as to dispose the penetrant liquid in an end nozzle row (81a,88b) that is a nozzle row positioned at an end portion of the head, and
generate liquid replacement data for replacing the liquid disposed in the head with the penetrant liquid and output the liquid replacement data to the printing device.

2. The image processing device according to Claim 1,
wherein when the ink to be replaced is in a nozzle row other than the end nozzle row, the color ink filled in the end nozzle row is disposed in a nozzle row filled with the ink to be replaced.

3. The image processing device according to Claim 1 or Claim 2,
wherein a profile is generated based on a nozzle row placement determined by the nozzle row placement method.

4. The image processing device according to any one of the preceding claims, the printing device (100) further comprising:
a display (113); and
an input (112) section,
wherein a replacement candidate ink that is a candidate for the ink to be replaced based on the usage amount is displayed on the display, and the replacement candidate ink selected by the input section is determined to be the ink to be replaced.

5. The image processing device according to any one of the preceding claims,
wherein the ink to be replaced is determined from color inks other than cyan, yellow, magenta and black color inks.

6. The image processing device according to any one of the preceding claims,
wherein cyan, yellow, magenta and black color inks are placed in advance in nozzle rows other than the end nozzle row.

7. A printing system comprising an image processing device according to any one of the preceding claims and a printing device (100) including a head (80) having a plurality of nozzle rows (81-88) configured to discharge liquids onto a medium (95), and configured to fill the head with the liquids selected according to the number of nozzle rows, the liquid being a color ink and a penetrant liquid (Ac), the printing device comprising:
a receiving unit (2) for receiving liquid replacement data for replacing the liquid placed in the head so as to dispose the penetrant liquid in an end nozzle row that is the nozzle row positioned at the end portion of the head as necessary, the data being output from the image processing device;
a discharging unit (72) configured to discharge the color ink from a liquid flow path through which the liquid flows based on the liquid replacement data; and
a filling unit (72) configured to fill the head with the penetrant liquid or the penetrant liquid and the color ink.

8. The printing system according to Claim 7,
wherein when the ink to be replaced with the penetrant liquid is filled in the end nozzle row that is the nozzle row positioned at the end portion of the head,
the color ink of the end nozzle row that is filled with the replacement ink is discharged by the discharging unit, and
the penetrant liquid is filled in the end nozzle row by the filling unit.

9. The printing system according to Claim 7 or Claim 8,
wherein when the ink to be replaced with the penetrant liquid is filled in a nozzle row other than the end nozzle row that is a nozzle row positioned at the end portion of the head,
the color ink of the nozzle row filled with the ink to be replaced and the color ink of the end nozzle row are discharged by the discharging unit, and
the penetrant liquid is filled in the end nozzle row and the color ink filled in the end nozzle row is filled in the nozzle row filled with the ink to be replaced by the filling unit.

10. The printing system according to according to any one of Claims 7 to 9,
wherein the discharging unit is configured to clean the liquid flow path.

11. A liquid replacement data generating method of an image processing device (10) for generating data that causes a printing device (100), which includes a head having (80) a plurality of nozzle rows (81-88) that discharge liquids onto a medium (95) and is configured to dispose the liquids selected according to the nozzle rows in the head, to perform printing, the liquids being a color ink and a penetrant liquid,
**characterised in** the method comprising:
when it is necessary to newly dispose the penetrant liquid in the head,
calculating a usage amount of each color ink from printing data generated based on the color ink dispose in the nozzle row;
determining an ink to be replaced with the penetrant liquid based on the usage amount; and
determining a nozzle row placement method so as to dispose the penetrant liquid in an end nozzle row (81a,88b) that is a nozzle row positioned at an end portion of the head.

12. The liquid replacement data generating method according to Claim 11, further comprising:
determining whether the ink to be replaced is placed in a nozzle row other than the end nozzle row,
wherein when the ink to be replaced is disposed in a nozzle row other than the end nozzle row, the color ink filled in the end nozzle row is disposed in a nozzle row that is filled with the ink to be replaced.

13. The liquid replacement data generating method according to Claim 11 or Claim 12, further comprising:
generating a profile based on the placement of the nozzle rows determined by the determining of the nozzle row placement method.

14. The liquid replacement data generating method according to any one of Claims 11 to 13, further comprising:
displaying replacement candidate inks that are candidates for the ink to be replaced on a display; and
receiving the ink to be replaced selected from the replacement candidate inks that are displayed.

15. A liquid replacement method of a printing device (100) including a head (80) having a plurality of nozzle rows (81-88) that discharge liquids onto a medium (95), and configured to fill the head with the liquids selected according to the nozzle rows, the liquid being a color ink and a penetrant liquid,
the method comprising:
receiving liquid replacement data for replacing the liquid to be disposed in the head such that the penetrant liquid is disposed in the end nozzle row that is a nozzle row positioned at the end portion of the head as necessary, the liquid replacement data output from an image processing device ;
discharging the color ink from a liquid flow path (202) through which the liquid flows based on the liquid replacement data;
filling the head with the penetrant liquid or the penetrant liquid and the color ink; and
when it is necessary to newly dispose the penetrant liquid in the head, the image processing device is configured to
calculate a usage amount of each color ink from printing data generated based on the color ink disposed in the nozzle row (81a-88b), wherein the image processing device integrates the discharging amounts of the color ink discharged from each of the nozzle rows (81a-88b) and calculates the usage amount for each color ink, and
determine an ink to be replaced with the penetrant liquid based on the usage amount, **characterised in that** the image processing device is further configured to
determine a nozzle row placement method so as to dispose the penetrant liquid in an end nozzle row (81a,88b) that is a nozzle row positioned at an end portion of the head, and
generate liquid replacement data for replacing the liquid disposed in the head with the penetrant liquid and output the liquid replacement data to the printing device.

16. The liquid replacement method according to Claim 15,
wherein when the ink to be replaced with the penetrant liquid is filled in the end nozzle row that is the nozzle row positioned at the end portion of the head,
the color ink of the end nozzle row filled with the ink to be replaced is discharged in the discharging, and
the penetrant liquid is filled in the end nozzle row in the filling.

17. The liquid replacement method according to Claim 15 or Claim 16, the method further comprising:
when the ink to be replaced with the penetrant liquid is filled in a nozzle row other than the end nozzle row positioned at the end portion of the head,
discharging the color ink of the nozzle row filled with the ink to be replaced and the color ink of the end nozzle row in the discharging; and
filling the end nozzle row with the penetrant liquid, and filling the nozzle row which was filled with the ink to be replaced with the color ink which was filled in the end nozzle row.

18. The liquid replacement method according to any one of Claims 15 to 17, wherein the discharging includes cleaning the liquid flow path.

## Patentansprüche

1. Bildverarbeitungsvorrichtung (110) zur Verwendung mit einer Druckvorrichtung (100), die einen Kopf mit mehreren Düsenreihen (81-88) zum Abgeben von Flüssigkeiten auf ein Medium (95) enthält und eingerichtet ist, den Kopf mit den Flüssigkeiten zu füllen, die gemäß den Düsenreihen (81-88) ausgewählt werden, wobei die Bildverarbeitungsvorrichtung eingerichtet ist, Daten zu erzeugen, die die Druckvorrichtung veranlassen, einen Druck durchzuführen,
wobei die Flüssigkeiten eine Farbtinte und eine durchdringende Flüssigkeit (Ac) sind,
wenn es notwendig ist, die durchdringende Flüssigkeit erneut im Kopf bereitzustellen, die Bildverarbeitungsvorrichtung eingerichtet ist zum
Berechnen einer Verbrauchsmenge jeder Farbtinte aus Druckdaten, die basierend auf der Farbtinte erzeugt werden, die in der Düsenreihe (81a-88b) bereitgestellt ist, wobei die Bildverarbeitungsvorrichtung eingerichtet ist, die Verbrauchsmengen der Farbtinte, die aus jeder der Düsenreihen (81a-88b) abgegeben wird, zu integrieren, und die Verbrauchsmenge für jede Farbtinte berechnet, und
Bestimmen einer Tinte, die durch die durchdringende Flüssigkeit ausgetauscht wird, basierend auf der Verbrauchsmenge, **dadurch gekennzeichnet, dass** die Bildverarbeitungsvorrichtung weiter eingerichtet ist zum Bestimmen eines Düsenreihenplatzierungsverfahrens, um so die durchdringende Flüssigkeit in einer Enddüsenreihe (81a, 88b) bereitzustellen, die eine Düsenreihe ist, die an einem Endabschnitt des Kopfs positioniert ist, und
Erzeugen von Flüssigkeitsaustauschdaten zum Austauschen der Flüssigkeit, die in dem Kopf bereitgestellt ist, durch die durchdringende Flüssigkeit und Ausgeben der Flüssigkeitsaustauschdaten an die Druckvorrichtung.

2. Bildverarbeitungsvorrichtung nach Anspruch 1,
wobei, wenn die Tinte, die ausgetauscht werden soll, in einer anderen Düsenreihe als der Enddüsenreihe ist, die Farbtinte, die in die Enddüsenreihe gefüllt ist, in einer Düsenreihe bereitgestellt wird, die mit der Tinte gefüllt ist, die auszutauschen ist.

3. Bildverarbeitungsvorrichtung nach Anspruch 1 oder Anspruch 2,
wobei ein Profil basierend auf einer Düsenreihenplatzierung erzeugt wird, die durch das Düsenreihenplatzierungsverfahren bestimmt wird.

4. Bildverarbeitungsvorrichtung nach einem der vorstehenden Ansprüche, wobei die Druckvorrichtung (100) weiter umfasst:
eine Anzeige (113); und
einen Eingabebereich (112);
wobei eine Austauschkandidatentinte, die ein Kandidat für die auszutauschende Tinte ist, basierend auf der Verbrauchsmenge auf der Anzeige angezeigt wird und die Austauschkandidatentinte, die von dem Eingabebereich ausgewählt wird, als die auszutauschende Tinte bestimmt wird.

5. Bildverarbeitungsvorrichtung nach einem der vorstehenden Ansprüche,
wobei die auszutauschende Tinte aus anderen Farbtinten als cyanfarbenen, gelben, magentafarbenen und schwarzen Farbtinten bestimmt wird.

6. Bildverarbeitungsvorrichtung nach einem der vorstehenden Ansprüche,
wobei cyanfarbene, gelbe, magentafarbene und schwarze Farbtinten im Voraus in anderen Düsenreihen als der Enddüsenreihe platziert werden.

7. Drucksystem, umfassend eine Bildverarbeitungsvorrichtung nach einem der vorstehenden Ansprüche und eine Druckvorrichtung (100), die einen Kopf (80) mit mehreren Düsenreihen (81-88) enthält, die zum Abgeben von Flüssigkeiten auf ein Medium (95) eingerichtet sind, und eingerichtet ist, den Kopf mit den Flüssigkeiten zu füllen, die gemäß der der Anzahl von Düsenreihen ausgewählt werden, wobei die Flüssigkeit eine Farbtinte und eine durchdringende Flüssigkeit (Ac) ist, wobei die Druckvorrichtung umfasst:
eine Empfangseinheit (2) zum Empfangen von Flüssigkeitsaustauschdaten zum Austauschen der Flüssigkeit, die in dem Kopf platziert ist, um so die durchdringende Flüssigkeit in einer Enddüsenreihe bereitzustellen, die die Düsenreihe ist, die falls notwendig an dem Endabschnitt des Kopfs positioniert ist, wobei die Daten aus der Bildverarbeitungsvorrichtung ausgegeben werden;
eine Abgabeeinheit (72), die eingerichtet ist, die Farbtinte aus einem Flüssigkeitsströmungsweg, durch den die Flüssigkeit fließt, basierend auf den Flüssigkeitsaustauschdaten auszugeben; und
eine Fülleinheit (72), die eingerichtet ist, den Kopf mit der durchdringenden Flüssigkeit oder der durchdringenden Flüssigkeit und der Farbtinte zu füllen.

8. Drucksystem nach Anspruch 7,
wobei, wenn die Tinte, die durch die durchdringende Flüssigkeit auszutauschen ist, in die Enddüsenreihe gefüllt ist, die die Düsenreihe ist, die am Endabschnitt des Kopfs positioniert ist,
die Farbtinte der Enddüsenreihe, die mit der Austauschtinte gefüllt wird, von der Abgabeeinheit abgegeben wird, und
die durchdringende Flüssigkeit von der Fülleinheit in die Enddüsenreihe eingefüllt wird.

9. Drucksystem nach Anspruch 7 oder Anspruch 8,
wobei, wenn die Tinte, die durch die durchdringende Flüssigkeit auszutauschen ist, in einer andere Düsenreihe als die Enddüsenreihe gefüllt ist, die die Düsenreihe ist, die am Endabschnitt des Kopfs positioniert ist,
die Farbtinte der Düsenreihe, die mit der Austauschtinte gefüllt ist, und die Farbtinte der Enddüsenreihe von der Abgabeeinheit abgegeben werden, und
die durchdringende Flüssigkeit in die Enddüsenreihe gefüllt wird, und die Farbtinte, die in die Enddüsenreihe gefüllt ist, durch die Fülleinheit in die Düsenreihe gefüllt wird, die mit der auszutauschenden Tinte gefüllt wird.

10. Drucksystem nach einem der Ansprüche 7 bis 9,
wobei die Abgabeeinheit eingerichtet ist, den Flüssigkeitsströmungsweg zu reinigen.

11. Verfahren zum Erzeugen von Flüssigkeitsaustauschdaten einer Bildverarbeitungsvorrichtung (10) zum Erzeugen von Daten, die eine Druckvorrichtung (100), die einen Kopf (80) mit mehreren Düsenreihen (81-88), die Flüssigkeiten auf ein Medium (95) abgeben, enthält und eingerichtet ist, die gemäß den Düsenreihen in dem Kopf ausgewählten Flüssigkeiten bereitzustellen, um einen Druck durchzuführen, wobei die Flüssigkeiten eine Farbtinte und eine durchdringende Flüssigkeit sind, **dadurch gekennzeichnet, dass** das Verfahren umfasst:
wenn es notwendig ist, die durchdringende Flüssigkeit erneut im Kopf bereitzustellen,
Berechnen einer Verbrauchsmenge jeder Farbtinte aus Druckdaten, die basierend auf der Farbtinte erzeugt werden, die in der Düsenreihe bereitgestellt ist;
Bestimmen einer Tinte, die mit der durchdringenden Flüssigkeit auszutauschen ist, basierend auf der Verbrauchsmenge; und
Bestimmen eines Düsenreihenplatzierungsverfahrens, um so die durchdringende Flüssigkeit in einer Enddüsenreihe bereitzustellen, die eine Düsenreihe (81a, 88b) ist, die an einem Endabschnitt des Kopfs positioniert ist.

12. Verfahren zum Erzeugen von Flüssigkeitsaustauschdaten nach Anspruch 11, weiter umfassend:
Bestimmen, ob die auszutauschende Tinte in einer anderen Düsenreihe als der Enddüsenreihe platziert ist,
wobei, wenn die Tinte, die ausgetauscht werden soll, in einer anderen Düsenreihe als der Enddüsenreihe ist, die Farbtinte, die in die Enddüsenreihe gefüllt ist, in einer Düsenreihe bereitgestellt wird, die mit der Tinte gefüllt ist, die auszutauschen ist.

13. Verfahren zum Erzeugen von Flüssigkeitsaustauschdaten nach Anspruch 11 oder Anspruch 12, weiter umfassend:
Erzeugen eines Profils basierend auf der Platzierung der Düsenreihen, die durch das Bestimmen des Düsenreihenplatzierungsverfahren bestimmt werden.

14. Verfahren zum Erzeugen von Flüssigkeitsaustauschdaten nach einem der Ansprüche 11 bis 13, weiter umfassend:
Anzeigen von Austauschkandidatentinten, die Kandidaten für die auszutauschende Tinte sind, auf einer Anzeige; und
Empfangen der auszutauschenden Tinte, die aus den Austauschkandidatentinten ausgewählt ist, die angezeigt werden.

15. Flüssigkeitsaustauschverfahren einer Druckvorrichtung (100), die einen Kopf (80) mit mehreren Düsenreihen (81-88), die Flüssigkeiten auf ein Medium (95) abgeben, enthält und eingerichtet ist, den Kopf mit den gemäß den Düsenreihen ausgewählten Flüssigkeiten zu füllen, wobei die Flüssigkeit eine Farbtinte und eine durchdringende Flüssigkeit ist,
das Verfahren umfassend:
Empfangen von Flüssigkeitsaustauschdaten zum Austauschen der Flüssigkeit, die in dem Kopf bereitzustellen ist, sodass die durchdringende Flüssigkeit, falls notwendig, in der Enddüsenreihe bereitgestellt ist, die eine Düsenreihe ist, die an einem Endabschnitt des Kopfs positioniert ist, wobei die Flüssigkeitsaustauschdaten von einer Bildverarbeitungsvorrichtung ausgegeben werden;
Abgeben der Farbtinte aus einem Flüssigkeitsströmungsweg (202), durch den die Flüssigkeit fließt, basierend auf den Flüssigkeitsaustauschdaten;
Füllen des Kopfs mit der durchdringenden Flüssigkeit oder der durchdringenden Flüssigkeit und der Farbtinte; und
wenn es notwendig ist, die durchdringende Flüssigkeit erneut in dem Kopf bereitzustellen, die Bildverarbeitungsvorrichtung eingerichtet ist zum Berechnen einer Verbrauchsmenge jeder Farbtinte aus Druckdaten, die basierend auf der Farbtinte erzeugt werden, die in der Düsenreihe (81a-88b) bereitgestellt ist, wobei die Bildverarbeitungsvorrichtung die Verbrauchsmengen der Farbtinte, die aus jeder der Düsenreihen (81a-88b) abgegeben wird, integriert und die Verbrauchsmenge für jede Farbtinte berechnet, und
Bestimmen einer Tinte, die durch die durchdringende Flüssigkeit ausgetauscht wird, basierend auf der Verbrauchsmenge, **dadurch gekennzeichnet, dass** die Bildverarbeitungsvorrichtung weiter eingerichtet ist zum Bestimmen eines Düsenreihenplatzierungsverfahrens, um so die durchdringende Flüssigkeit in einer Enddüsenreihe (81a, 88b) bereitzustellen, die eine Düsenreihe ist, die an einem Endabschnitt des Kopfs positioniert ist, und
Erzeugen von Flüssigkeitsaustauschdaten zum Austauschen der Flüssigkeit, die in dem Kopf bereitgestellt ist, durch die durchdringende Flüssigkeit und Ausgeben der Flüssigkeitsaustauschdaten an die Druckvorrichtung.

16. Flüssigkeitsaustauschverfahren nach Anspruch 15,
wobei, wenn die Tinte, die durch die durchdringende Flüssigkeit ausgetauscht werden soll, in die Enddüsenreihe gefüllt ist, die die Düsenreihe ist, die an dem Endabschnitt des Kopfs positioniert ist, die Farbtinte der Enddüsenreihe, die mit der auszutauschenden Tinte gefüllt ist, beim Abgeben abgegeben wird, und
die durchdringende Flüssigkeit beim Füllen in die Enddüsenreihe gefüllt wird.

17. Flüssigkeitsaustauschverfahren nach Anspruch 15 oder Anspruch 16, wobei das Verfahren weiter umfasst:
wenn die Tinte, die durch die durchdringende Flüssigkeit ausgetauscht werden soll, in eine andere Düsenreihe als die Enddüsenreihe gefüllt ist, die am Endabschnitt des Kopfs positioniert ist,
Abgeben der Farbtinte der Düsenreihe, die mit der auszutauschenden Tinte gefüllt ist, und der Farbtinte der Enddüsenreihe beim Abgeben; und
Füllen der Enddüsenreihe mit der durchdringenden Flüssigkeit und Füllen der Düsenreihe, die mit der auszutauschenden Tinte gefüllt war, mit der Farbtinte, die in die Enddüsenreihe gefüllt war.

18. Flüssigkeitsaustauschverfahren nach einem der Ansprüche 15 bis 17,
wobei das Abgeben Reinigen des Flüssigkeitsströmungswegs enthält.

## Revendications

1. Dispositif de traitement d'images (110) destiné à être utilisé avec un dispositif d'impression (100) incluant une tête dotée d'une pluralité de rangées de buses (81-88) permettant de décharger des liquides sur un support (95), et configuré pour remplir la tête avec les liquides sélectionnés en fonction des rangées de buses (81-88), le dispositif de traitement d'images étant configuré pour générer des données incitant le dispositif d'impression à exécuter l'impression,
dans lequel les liquides sont une encre de couleur et un liquide pénétrant (Ac),
lorsqu'il est nécessaire de déposer un nouveau liquide pénétrant dans la tête, le dispositif de traitement d'images est configuré pour
calculer une quantité d'utilisation de chaque encre de couleur à partir de données d'impression générées sur la base de l'encre de couleur déposée dans la rangée de buses (81a-88b), le dispositif de traitement d'images étant configuré pour intégrer les quantités de décharge de l'encre de couleur déchargée à partir de chacune des rangées de buses (81a-88b) et pour calculer la quantité d'utilisation pour chaque encre de couleur, et
déterminer une encre à remplacer par le liquide pénétrant sur la base de la quantité d'utilisation, **caractérisé en ce que** le dispositif de traitement d'images est en outre configuré pour déterminer un procédé de placement de rangées de buses de manière à déposer le liquide pénétrant dans une rangée de buses (81a, 88b) finale consistant en une rangée de buses positionnée au niveau d'une partie d'extrémité de la tête, et
générer des données de remplacement de liquide pour le remplacement du liquide déposé dans la tête par le liquide pénétrant et transmettre les données de remplacement de liquide au dispositif d'impression.

2. Dispositif de traitement d'images selon la revendication 1,
dans lequel, lorsque l'encre à remplacer se trouve dans une rangée de buses autre que la rangée de buses finale, l'encre de couleur remplie dans la rangée de buses finale est déposée dans une rangée de buses remplie avec l'encre à remplacer.

3. Dispositif de traitement d'images selon la revendication 1 ou la revendication 2,
dans lequel un profil est généré sur la base d'un placement de rangées de buses déterminé par le procédé de placement de rangées de buses.

4. Dispositif de traitement d'images selon l'une quelconque des revendications précédentes, le dispositif d'impression (100) comprenant en outre :
un écran (113) ; et
une section d'entrée (112),
dans lequel une encre candidate au remplacement constituant un candidat pour l'encre à remplacer sur la base de la quantité d'utilisation s'affiche sur l'écran, et l'encre candidate au remplacement sélectionnée par la section d'entrée est déterminée comme étant l'encre à remplacer.

5. Dispositif de traitement d'images selon l'une quelconque des revendications précédentes,
dans lequel l'encre à remplacer est déterminée à partir d'encres de couleur autres que les encres de couleur cyan, jaune, magenta et noire.

6. Dispositif de traitement d'images selon l'une quelconque des revendications précédentes,
dans lequel les encres de couleur cyan, jaune, magenta et noire sont placées à l'avance dans des rangées de buses autres que la rangée de buses finale.

7. Système d'impression comprenant un dispositif de traitement d'images selon l'une quelconque des revendications précédentes et un dispositif d'impression (100) incluant une tête (80) comportant une pluralité de rangées de buses (81-88) configurées pour décharger des liquides sur un support (95), et configuré pour remplir la tête avec les liquides sélectionnés en fonction du nombre de rangées de buses, le liquide étant une encre de couleur et un liquide pénétrant (Ac), le dispositif d'impression comprenant :
une unité de réception (2) destinée à recevoir des données de remplacement de liquide pour le remplacement du liquide placé dans la tête de manière à déposer le liquide pénétrant dans une rangée de buses finale consistant en la rangée de buses positionnée au niveau de la partie d'extrémité de la tête selon les besoins, les données étant émises par le dispositif de traitement d'images ;
une unité de décharge (72) configurée pour décharger l'encre de couleur à partir d'un trajet d'écoulement de liquide à travers lequel s'écoule le liquide, sur la base des données de remplacement de liquide ; et
une unité de remplissage (72) configurée pour remplir la tête avec le liquide pénétrant ou le liquide pénétrant et l'encre de couleur.

8. Système d'impression selon la revendication 7,
dans lequel, lorsque l'encre à remplacer par le liquide pénétrant est remplie dans la rangée de buses finale consistant en la rangée de buses positionnée au niveau de la partie d'extrémité de la tête,
l'encre de couleur de la rangée de buses finale remplie avec l'encre de remplacement est déchargée par l'unité de décharge, et
le liquide pénétrant est rempli dans la rangée de buses finale par l'unité de remplissage.

9. Système d'impression selon la revendication 7 ou la revendication 8,
dans lequel, lorsque l'encre à remplacer par le liquide pénétrant est remplie dans une rangée de buses autre que la rangée de buses finale consistant en une rangée de buses positionnée au niveau de la partie d'extrémité de la tête,
l'encre de couleur de la rangée de buses remplie avec l'encre à remplacer et l'encre de couleur de la rangée de buses finale sont déchargées par l'unité de décharge, et
le liquide pénétrant est rempli dans la rangée de buses finale et l'encre de couleur remplis dans la rangée de buses finale est remplie dans la rangée de buses remplie avec l'encre à remplacer par l'unité de remplissage.

10. Système d'impression selon l'une quelconque des revendications 7 à 9,
dans lequel l'unité de décharge est configurée pour nettoyer le trajet d'écoulement de liquide.

11. Procédé de génération de données de remplacement de liquide d'un dispositif de traitement d'images (10) pour la génération de données incitant un dispositif d'impression (100), lequel inclut une tête (80) comportant une pluralité de rangées de buses (81-88) déchargeant des liquides sur un support (95) et configurée pour déposer les liquides sélectionnés en fonction des rangées de buses dans la tête, à exécuter une impression, les liquides étant une encre de couleur et un liquide pénétrant,
**caractérisé en ce que** le procédé comprend :
lorsqu'il est nécessaire de déposer un nouveau liquide pénétrant dans la tête,
le calcul d'une quantité d'utilisation de chaque encre de couleur à partir de données d'impression générées sur la base de l'encre de couleur déposée dans la rangée de buses ;
la détermination d'une encre à remplacer par le liquide pénétrant sur la base de la quantité d'utilisation ; et
la détermination d'un procédé de placement de rangées de buses de manière à déposer le liquide pénétrant dans une rangée de buses finale (81a, 88b) consistant en une rangée de buses positionnée au niveau d'une partie d'extrémité de la tête.

12. Procédé de génération de données de remplacement de liquide selon la revendication 11, comprenant en outre :
la détermination si l'encre à remplacer est placée dans une rangée de buses autre que la rangée de buses finale,
dans lequel, lorsque l'encre à remplacer est déposée dans une rangée de buses autre que la rangée de buses finale, l'encre de couleur remplie dans la rangée de buses finale est déposée dans une rangée de buses remplie avec l'encre à remplacer.

13. Procédé de génération de données de remplacement de liquide selon la revendication 11 ou la revendication 12, comprenant en outre :
la génération d'un profil sur la base du placement des rangées de buses déterminé par la détermination du procédé de placement de rangées de buses.

14. Procédé de génération de données de remplacement de liquide selon l'une quelconque des revendications 11 à 13, comprenant en outre :
l'affichage d'encres candidates au remplacement, lesquelles sont des candidates pour l'encre à remplacer, sur un écran ; et
la réception de l'encre à remplacer sélectionnée parmi les encres candidates au remplacement affichées.

15. Procédé de remplacement de liquide d'un dispositif d'impression (100) incluant une tête (80) comportant une pluralité de rangées de buses (81-88) déchargeant des liquides sur un support (95), et configuré pour remplir la tête avec les liquides sélectionnés en fonction des rangées de buses, le liquide étant une encre de couleur et un liquide pénétrant,
le procédé comprenant :
la réception de données de remplacement de liquide pour le remplacement du liquide déposé dans la tête de telle façon que le liquide pénétrant est déposé dans la rangée de buses finale consistant en la rangée de buses positionnée au niveau de la partie d'extrémité de la tête selon les besoins, les données de remplacement de liquide étant émises à partir d'un dispositif de traitement d'images ;
la décharge de l'encre de couleur à partir d'un trajet d'écoulement de liquide (202) à travers lequel s'écoule le liquide, sur la base des données de remplacement de liquide ;
le remplissage de la tête avec le liquide pénétrant ou le liquide pénétrant et l'encre de couleur ; et
lorsqu'il est nécessaire de déposer un nouveau liquide pénétrant dans la tête, le dispositif de traitement d'images est configuré pour
calculer une quantité d'utilisation de chaque encre de couleur à partir de données d'impression générées sur la base de l'encre de couleur déposée dans la rangée de buses (81a-88b), le dispositif de traitement d'images intégrant les quantités de décharge de l'encre de couleur déchargée à partir de chacune des rangées de buses (81a-88b) et calculant la quantité d'utilisation pour chaque encre de couleur, et
déterminer une encre à remplacer par le liquide pénétrant sur la base de la quantité d'utilisation, **caractérisé en ce que** le dispositif de traitement d'images est en outre configuré pour déterminer un procédé de placement de rangées de buses de manière à déposer le liquide pénétrant dans une rangée de buses (81a-88b) finale consistant en une rangée de buses positionnée au niveau d'une partie d'extrémité de la tête, et
générer des données de remplacement de liquide pour le remplacement du liquide déposé dans la tête par le liquide pénétrant et transmettre les données de remplacement de liquide au dispositif d'impression.

16. Procédé de remplacement selon la revendication 15,
dans lequel, lorsque l'encre à remplacer par le liquide pénétrant est remplie dans la rangée de buses finale consistant dans la rangée de buses positionnée au niveau de la partie d'extrémité de la tête,
l'encre de couleur de la rangée de buses finale remplie avec l'encre à remplacer est déchargée lors de la décharge, et
le liquide pénétrant est rempli dans la rangée de buses finale lors du remplissage.

17. Procédé de remplacement de liquide selon la revendication 15 ou la revendication 16, le procédé comprenant en outre :
lorsque l'encre à remplacer par le liquide pénétrant est remplie dans une rangée de buses autre que la rangée de buses finale positionnée au niveau de la partie d'extrémité de la tête,
la décharge de l'encre de couleur de la rangée de buses remplie avec l'encre à remplacer et l'encre de couleur de la rangée de buses finale lors de la décharge ; et
le remplissage de la rangée de buses finale avec le liquide pénétrant, et le remplissage de la rangée de buses auparavant remplie avec l'encre à remplacer avec l'encre de couleur auparavant remplie dans la rangée de buses finale.

18. Procédé de remplacement de liquide selon l'une quelconque des revendications 15 à 17,
dans lequel la décharge inclut le nettoyage du trajet d'écoulement de liquide.
